# FASCICULE DE BREVET EUROPEEN

(11) **EP 2 788 243 B1**
(45) Date de publication et mention de la délivrance du brevet: **09.03.2016**
(21) Numéro de dépôt: 12773028.1
(22) Date de dépôt: 12.09.2012
(51) Int. Cl.: B62B 3/02, B62B 7/08, B62B 7/12, B62B 7/06

(54) **STRUCTURE PORTANTE PLIABLE, POUSSETTE**
FALTBARE TRAGESTRUKTUR UND KINDERWAGEN DAMIT
FOLDING BEARING STRUCTURE, PUSHCHAIR

(30) Priorité: 08.12.2011 FR 1161318
(43) Date de publication de la demande: 15.10.2014
(73) Titulaire: Herbault, Patrick, 92250 La Garenne Colombes (FR)
(72) Inventeur: Herbault, Patrick, 92250 La Garenne Colombes (FR)
(74) Mandataire: Lebkiri, Alexandre
(86) Numéro de dépôt international: PCT/FR2012/052041
(87) Numéro de publication internationale: WO 2013/083890

(56) Documents cités:
- DE-U1- 29 506 777
- GB-A- 2 133 748

## Description

### DOMAINE

L'invention concerne le domaine des structures portantes pliables. Plus particulièrement, l'invention se rapporte au domaine des poussettes pliables. L'invention concerne plus particulièrement les dispositifs de pliages pour poussette permettant de réduire l'encombrement de ces dernières lorsqu'elles sont pliées.

### ETAT DE L'ART

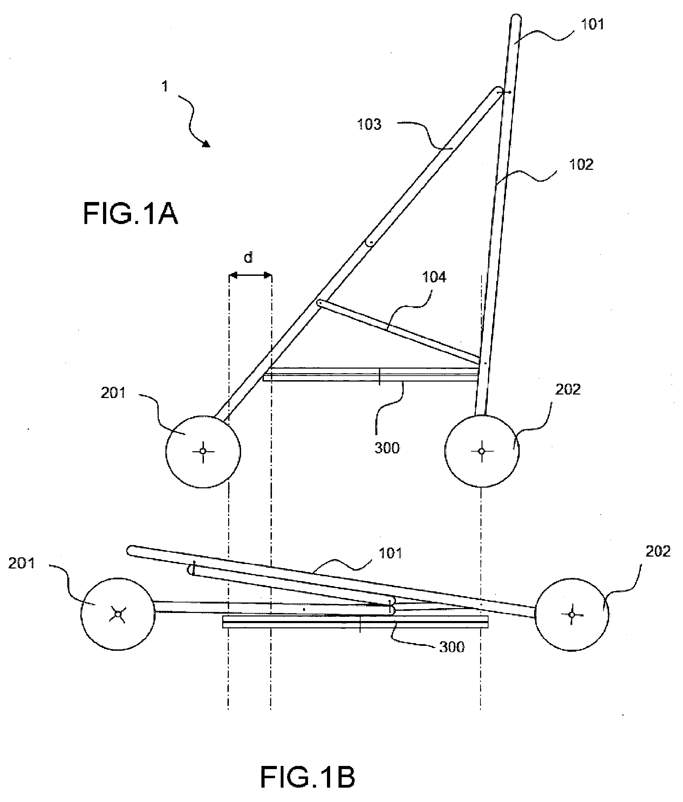

Actuellement, il existe différentes solutions techniques pour plier et déplier des poussettes. Parmi ces solutions, il existe tout une famille de poussettes qui au moment du pliage associe un mouvement de rabattement de la structure de guidage avec une diminution en largeur de cette dernière. Parmi cette famille, on trouve notamment les modèles du type Maclaren™, dont un exemple est représenté à la figure 1. Ces dernières permettent de réduire un encombrement dans l'espace lors du pliage de la poussette. Elles sont connues sous le nom de « poussette canne ».

La figure 1A représente une poussette 1 non pliée comprenant une armature de guidage comprenant des poignées 101, des bras arrière 102, des bras avant 103 et des moyens de liaisons 104. En outre, la poussette comprend un ensemble de roues avant 201 et arrière 202 et un premier dispositif de pliage 300 disposé dans un plan même horizontal des roues.

La figure 1 B représente une poussette 1 pliée. Les moyens de liaisons 104 permettent un pliage de l'armature en la ramenant dans le plan formé par les roues 201, 202. L'encombrement au niveau de la hauteur de la poussette est réduit par l'abaissement de l'armature de guidage dans un plan sensiblement horizontal.

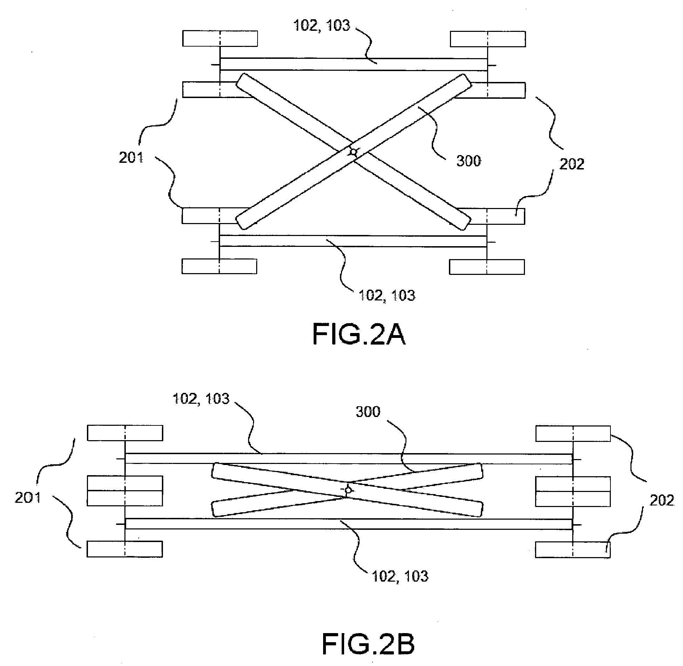

La figure 2A représente la poussette 1, en vue de dessus, dans une configuration non pliée. Le premier dispositif de pliage 300 forme une croix pliable, notamment autour d'un axe de rotation central. L'armature en vue de dessus dessine dans le plan de coupe des tiges 102, 103.

La figure 2B représente la poussette 1, en vue de dessus, dans une configuration pliée. La croix du premier dispositif de pliage 300 a subi un mouvement de rotation entrainant chaque côté de l'armature de guidage repliée l'un vers l'autre de manière à réduire l'encombrement de la largeur de la poussette.

La réduction en largeur est obtenue au moment du pliage par la fermeture partielle d'un système en croix placé horizontalement.

Un inconvénient des solutions existantes et qu'il reste néanmoins un encombrement important de la poussette pliée notamment dans sa hauteur. En outre, les roues des poussettes actuelles ont tendance à devenir de plus en plus grandes notamment pour l'amélioration de leur endurance et du confort du bébé qui est promené.

Ces poussettes sont souvent associées à des ensembles de roues doubles contribuant à l'encombrement général de la poussette.

Un autre inconvénient résulte de la cinématique de pliage qui impose un encombrement en longueur plus important en position pliée qu'en position dépliée. Cette augmentation est due à la fois à la fermeture du dispositif en croix dans le plan horizontal, aux mouvements du repliement de l'armature de guidage dans le plan horizontal et à la l'encombrement des roues.

Enfin, un inconvénient résulte également de la limitation des dimensions des roues pour obtenir une compacité raisonnable.

### RESUME DE L'INVENTION

L'invention permet de résoudre les inconvénients précités.

L'invention a pour but une structure portante pliable, notamment pour poussette, permettant de réduire un maximum l'encombrement de la structure pliée. Pour cela, l'invention permet un pliage des roues de la structure portante dans un plan horizontal. Dans un mode amélioré, l'invention propose un dispositif de synchronisation des différents pliages de la structure portante et des roues.

L'invention consiste à proposer un système de pliage aboutissant à une position pliée dans laquelle les roues sont orientées dans un plan horizontal, lesdites roues pouvant tourner d'un quart de tour.

Cette proposition s'intègre de façon optimale comme variante d'une poussette disposant déjà d'un système de pliage en largeur comportant une croix centrale, notamment du type poussette canne ou de la marque Maclaren™, mais ceci sans être limitatif de son application.

Avantageusement, la structure portante comprend :
- un ensemble de roues définissant un premier ensemble de roues avant et un second ensemble de roues arrière, l'ensemble de roues arrière comprenant au moins deux roues espacées d'une première largeur définissant une première position ;
- des supports de roues reliant les axes de rotation des roues avec la structure portante ;
- un premier dispositif de pliage permettant un premier pliage entrainant la réduction de l'espacement entre les deux roues arrière à une seconde largeur inférieur à la première largeur, définissant une seconde position.

Avantageusement, des moyens de liaisons, reliant les supports de roues des premier et second ensembles au premier dispositif de pliage, permettent un second pliage des roues de manière à autoriser une rotation sensiblement égale à 90° des roues dans le plan horizontal lorsque les roues sont dans la seconde position.

Avantageusement, les moyens de liaison permettent un entrainement du second pliage par l'action du premier pliage.

Avantageusement, la structure portante comprend une armature de guidage permettant de guider la structure portante lorsque les roues sont dans la première position.

Avantageusement, l'armature de guidage comprend des bras avant, des bras arrière et des poignées et un second dispositif de pliage permettant un troisième pliage entrainant les bras avant et arrière dans un plan sensiblement horizontal.

Avantageusement, des moyens de rigidification permettent de maintenir les bras arrière et les roues arrière dans un même plan.

Avantageusement, des moyens de rigidification comprennent une barre horizontale coulissante et de moyens de blocage de la dite barre permettant de maintenir les roues arrière verrouillées lorsque les moyens de blocage sont activés dans la première position et permettant de passer de la première à la seconde position quand le premier pliage est actionné lorsque les moyens de blocage sont désactivés.

Avantageusement, des moyens de propagation permettent la synchronisation du pliage des roues avant et du pliage des roues arrière lorsque le second pliage est activé.

Avantageusement, des moyens de propagation permettent la synchronisation du premier, du second et du troisième pliage.

Avantageusement, les moyens de propagation comprennent:
- des tiges pivotantes sur elles-mêmes, lesdites tiges reliant les supports de roues arrière aux supports de roues avant ;
- au moins une liaison glissière entre le premier dispositif de pliage et les tiges pivotantes, les tiges pivotantes, lesdites tiges assurant la synchronisation du premier pliage et du troisième pliage.

Avantageusement, les moyens de propagation comprennent au moins une liaison hélicoïdale entre les tiges pivotantes et les supports de roues avant assurant la synchronisation du premier pliage et du second pliage.

Avantageusement, le premier dispositif de pliage est une croix centrale pivotante de type poussette canne, ou plus particulièrement de type Maclaren™.

Avantageusement, des premiers moyens de verrouillage de la position des roues permettent de bloquer les roues dans la première position ou la seconde position.

Avantageusement, les premiers moyens de verrouillage comprennent un système d'indexation de trous positionnés à 90°.

Avantageusement, des seconds moyens de verrouillage de la position du premier dispositif de pliage et des moyens de propagations assurant la synchronisation des pliages permettent de maintenir la structure dans une position pliée souhaitée.

Avantageusement, les seconds moyens de verrouillage comprennent :
- au moins un ergot pouvant se positionner dans au moins un trou d'une tige pivotante, ladite tige étant creuse ;
- un bouton poussoir permettant de libérer un ergot d'un trou.

Avantageusement, un dispositif de synchronisation de la rotation des supports de roues arrière comprend, sur chacun des supports, la définition de deux points, dont un premier point dit « point supérieur », forme l'extrémité supérieure d'un support et l'autre point dit « point inférieur », forme un centre de rotation instantané du support lorsqu'il est plié, les quatre points ainsi définis formant un trapèze isocèle déformable dont les deux points supérieurs se déplacent horizontalement pendant le pliage/dépliage et les deux points inférieurs sont constamment sensiblement à la même distance.

Avantageusement, la poussette comporte une structure portante décrite dans la présente description.

Avantageusement, la structure portante de l'invention comprend une armature de guidage comprenant des bras avant, des bras arrière et des poignées et un second dispositif de pliage permettant :
- un quatrième pliage entrainant les bras arrière dans un plan intermédiaire et sécant au plan horizontal lorsque les roues sont sensiblement dans le plan horizontal, cette dernière position correspondant à une quatrième position, le quatrième pliage pouvant être poursuivie dans son mouvement par :
- un cinquième pliage entrainant les bras arrière dans un plan sensiblement horizontal de référence lorsque les roues ont effectué une rotation de 180° de manière à être dans un plan perpendiculaire au plan horizontal de référence, cette dernière position correspondant à une cinquième position.

Le plan séquent peut être dans le cas de l'utilisation d'un engrenage un plan sensiblement à 45° du plan horizontal.

Avantageusement, des moyens de rigidification permettent de maintenir les bras arrière et les roues arrière solidaires dans la cinquième position.

Avantageusement, les moyens de rigidification comprennent une barre horizontale coulissante et de moyens de blocage de la dite barre permettant de maintenir les roues arrière verrouillées lorsque les moyens de blocage sont activés dans la première position et permettant de passer de la première à la quatrième cinquième position quand le quatrième et le cinquième pliages sont actionnés lorsque les moyens de blocage sont désactivés.

Avantageusement, des moyens de propagation permettent la synchronisation du pliage des roues avant et du pliage des roues arrière lorsque le quatrième et le cinquième pliages sont activés.

Avantageusement, les moyens de propagation permettent la synchronisation d'une part du premier et du second pliage avec d'autres part le quatrième et le cinquième pliages.

Avantageusement, les premiers moyens de verrouillage comprennent un système d'indexation de trous positionnés à 180°.

### BREVES DESCRIPTION DES FIGURES

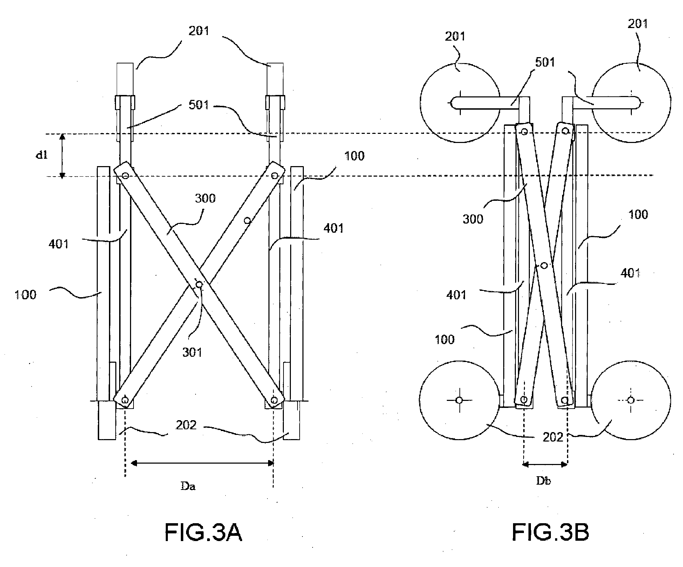

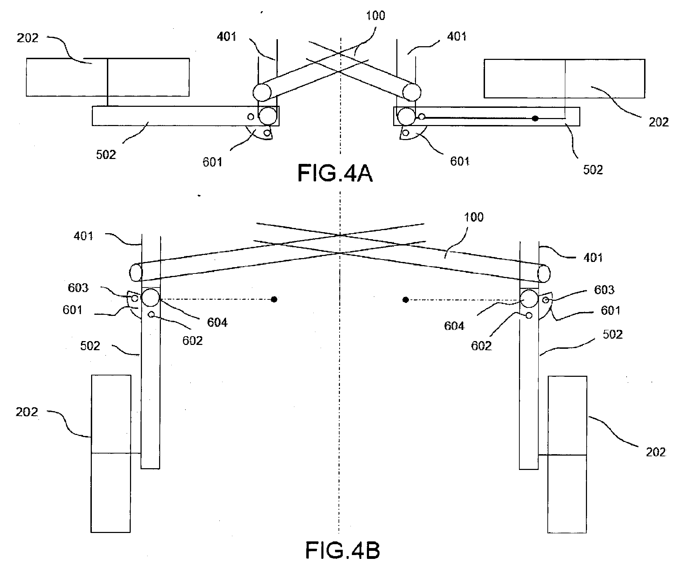

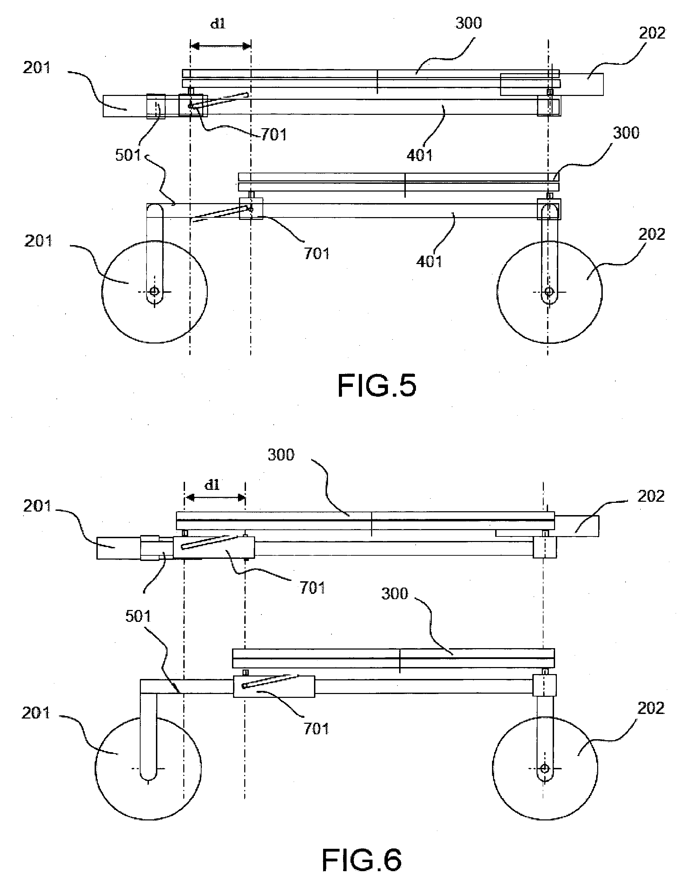

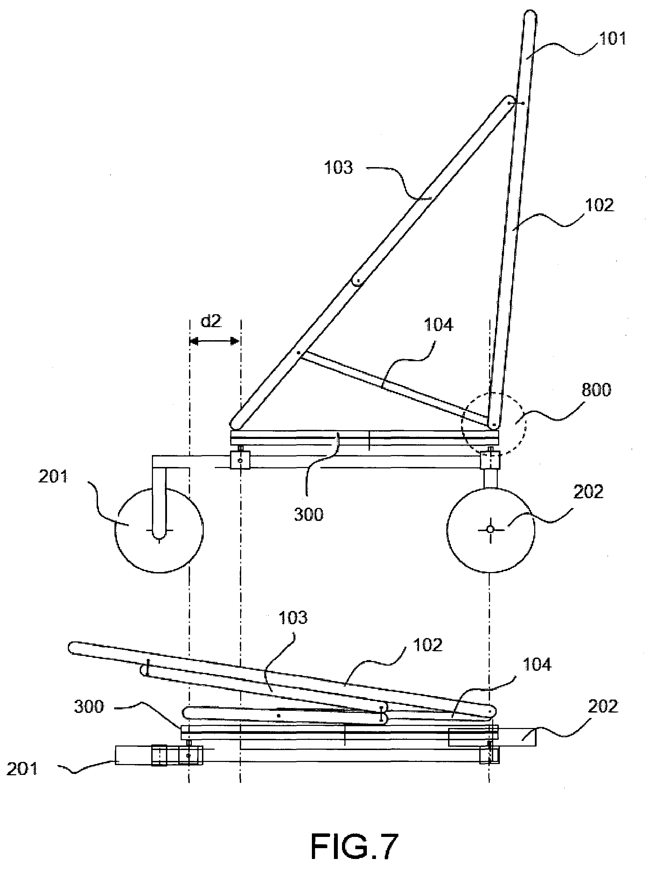

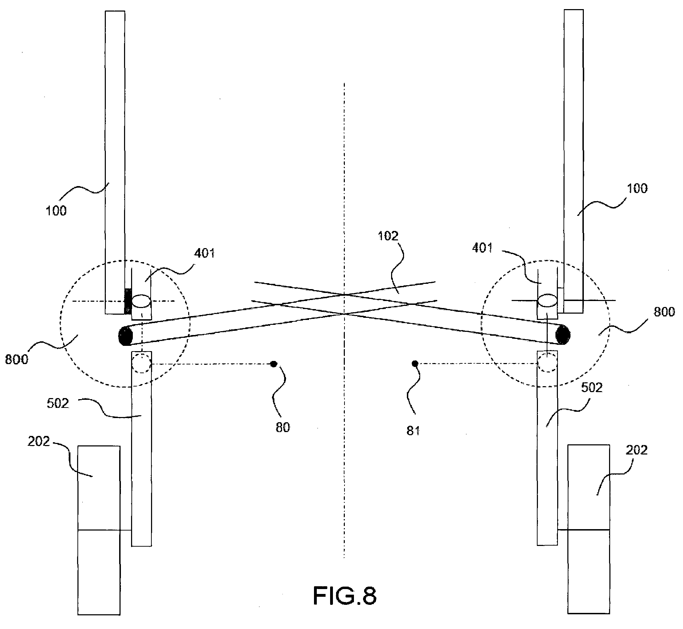

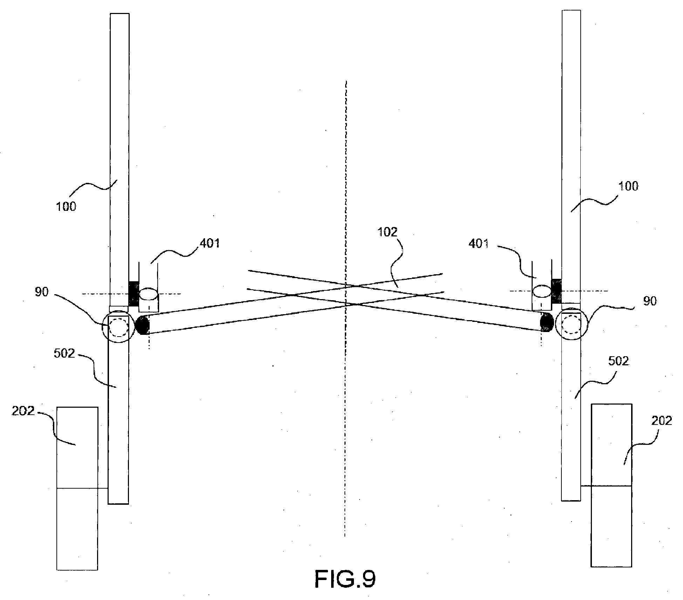

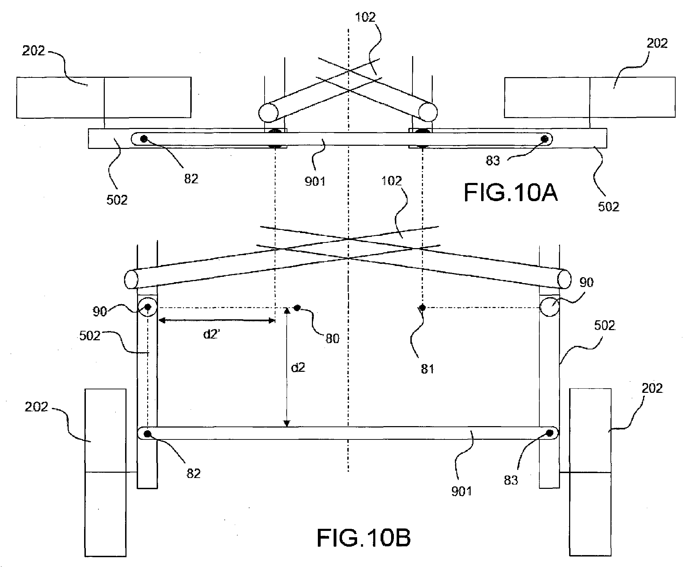

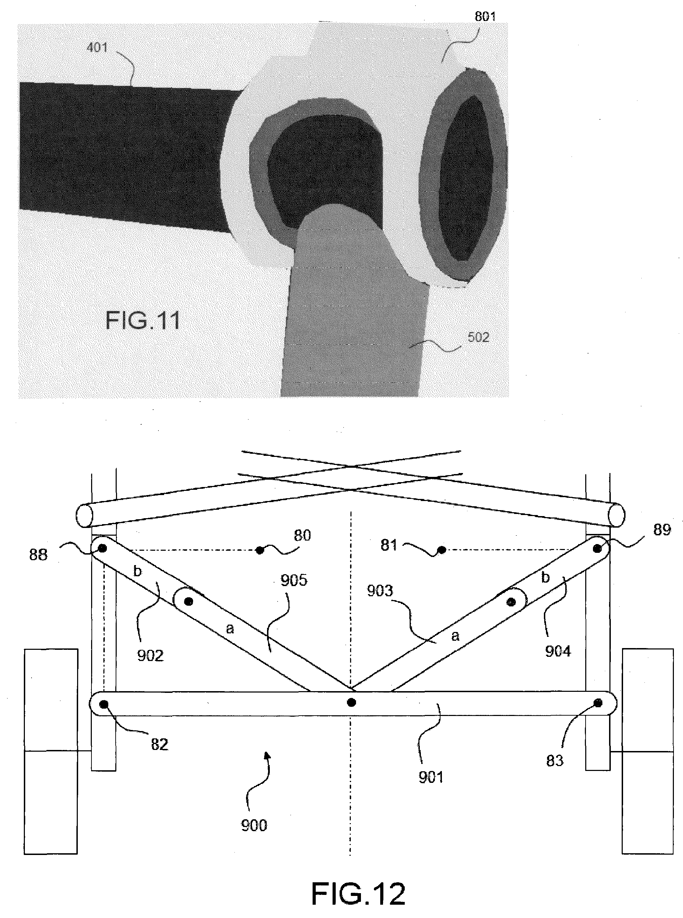

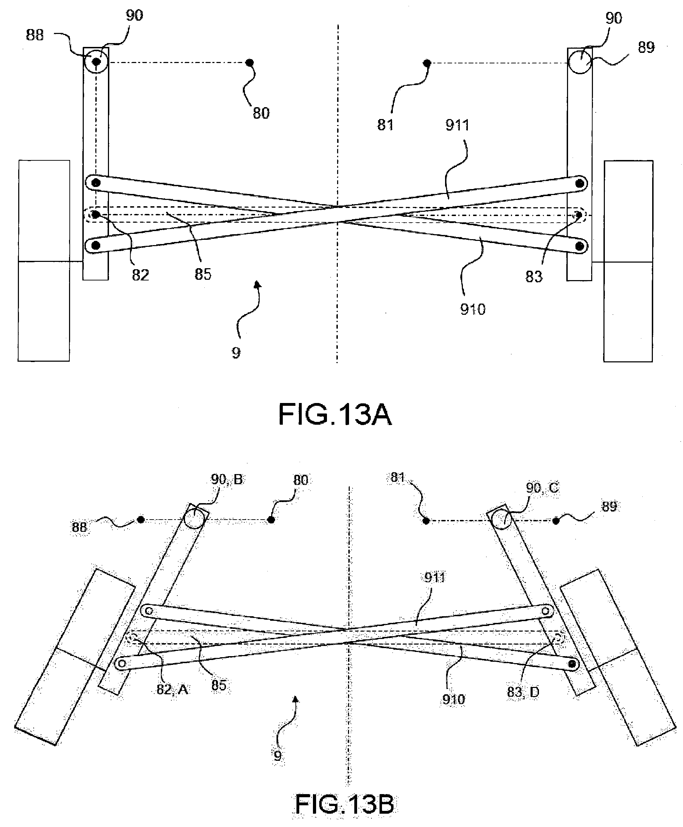

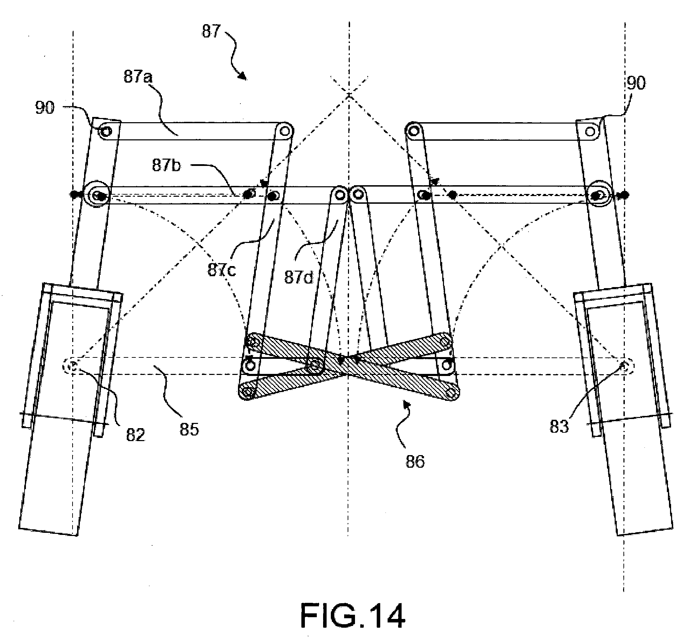

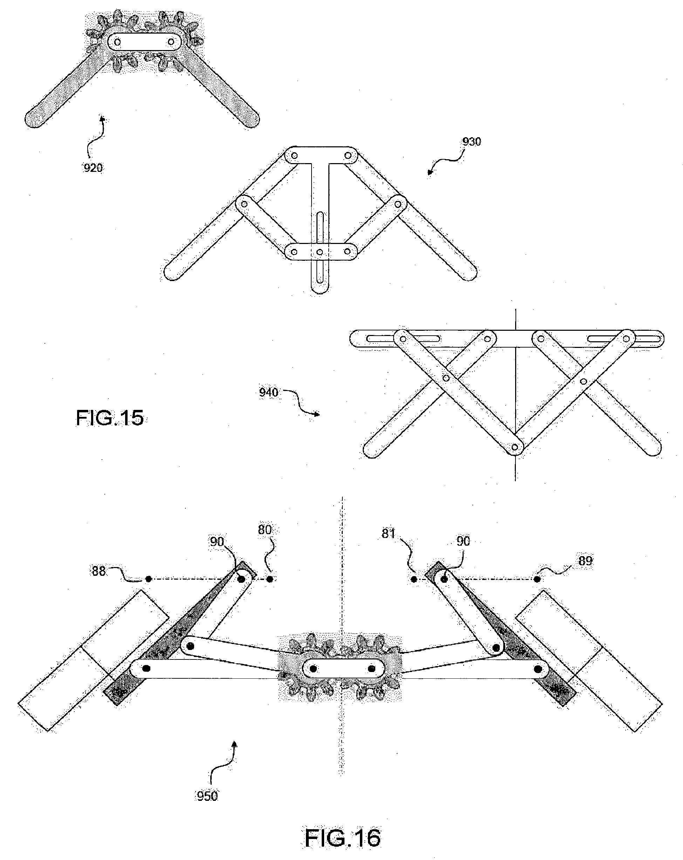

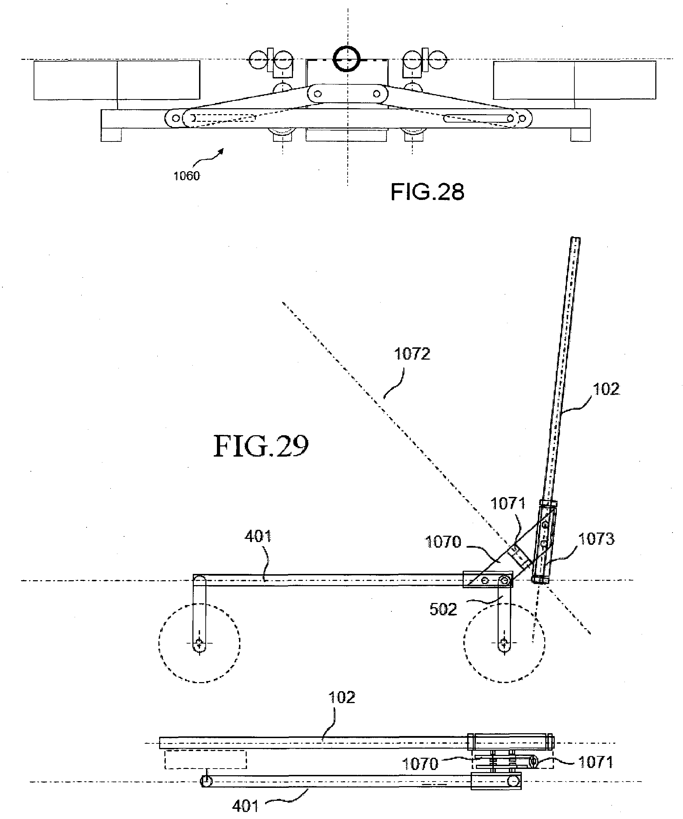

D'autres caractéristiques et avantages de l'invention ressortiront à la lecture de la description détaillée qui suit, en référence aux figures annexées, qui illustrent:
▪ figure 1 A, 1 B, 2A, 2B : différentes vues d'une poussette pliable de l'art antérieur ;
▪ figure 3 : une poussette comprenant un dispositif de pliage de l'invention ;
▪ figure 4 : un mode de réalisation comprenant un système d'indexation pour le maintien des roues ;
▪ figure 5 : un mode de réalisation comprenant une première rampe hélicoïdale ;
▪ figure 6 : un mode de réalisation comprenant une première rampe hélicoïdale ;
▪ figure 7 : un mode de réalisation comprenant des engrenages ;
▪ figure 8 : un mode de réalisation comprenant une première disposition d'engrenages ;
▪ figure 9 : un mode de réalisation comprenant une seconde disposition d'engrenages ;
▪ figure 10A, 10B : un mode de réalisation comprenant un premier dispositif de synchronisation des dispositifs de pliages ;
▪ figure 11 : une liaison pivot permettant de limiter la rotation des roues ;
▪ figure 12 : un mode de réalisation comprenant un second dispositif de synchronisation de pliages ;
▪ figure 13A, 13B : un mode de réalisation comprenant un troisième dispositif de synchronisation de pliages ;
▪ figure 14: un mode de réalisation comprenant un quatrième dispositif de synchronisation de pliages;
▪ figure 15 : trois alternatives de dispositifs de synchronisation de pliages;
▪ figures 16 à 28 : d'autres modes de réalisation d'un dispositif de synchronisation de pliages ;
▪ figure 29 à 33 : un mode de réalisation permettant un pliage des roues à 180° de manière à proposer une alternative d'encombrement de la poussette en position pliée.

### DESCRIPTION

Les figures 3A et 3B représentent, en vue de dessus, une structure portante pliable de l'invention. Notamment, les figures 3A et 3B représentent, plus particulièrement, une telle structure adaptée à la réalisation d'une poussette.

La poussette comprend un premier dispositif de pliage 300, appelé également dispositif de pliage central, et un ensemble de roues avant 201 et un ensemble de roues arrière 202.

Dans un mode de réalisation, le dispositif de pliage central 300 est une croix pliable en rotation autour de son axe central 301.

La poussette comprend des supports de roues 501 reliant l'axe de rotation de chaque roues avec la structure portante.

La poussette comprend une armature de guidage 100 représentée en vue de dessus.

Selon un mode de réalisation, la structure portante comprend des tiges 401 permettant de relier les roues avant des roues arrière, elles sont appelées dans la suite de la description des tiges de liaison. Dans une alternative, le dispositif de pliage central 300 peut réaliser cette fonction de liaison entre les roues avant et les roues arrière. Les tiges de liaisons sont donc optionnelles et peuvent contribuer à rigidifier la structure portante. En outre, dans certains modes de réalisation les tiges de liaison contribuent au transfert de la cinématique permettant la synchronisation des pliages de la structure.

Dans ce mode de réalisation, les tiges 401 sont positionnées de manière à rendre solidaires les roues avant avec les roues arrière. Selon les variantes de réalisation, les roues arrière peuvent être typiquement fixes et simples. On nomme des roues « simples » par opposition à la nomination utilisée de « roues doubles » telles que représentées sur les figures 2A ou 2B.

L'invention permet de disposer de supports de roues 501, 502 formant par exemple des tiges comme représentées sur les figures 3A et 3B. Dans ce dernier cas, les tiges sont appelées « tiges de support ». Les tiges de support avant sont référencées 501 sur les figures et les tiges de support arrière sont référencées 502.

Les tiges de support permettent une rotation sensiblement de 90° de manière à amener les roues avant et/ou arrière dans le plan horizontal lorsque le pliage des roues est engagé. Le support de roue est solidaire de la roue et tourne avec elle lors du pliage.

Les tiges forment un dispositif de pliage des roues. Selon les modes de réalisation, le dispositif de pliage des roues peut comprendre une structure équivalente à une tige.

Un système de blocage de roues dans une position pliée et/ou non pliée peut être couplé au dispositif de pliage des roues.

Les deux tiges de supports 501 des roues avant peuvent donc tourner d'un quart de tour d'une position verticale dépliée à une position horizontale pliée. Les supports des roues arrière 501 peuvent également être amovibles, ou pliables, et tourner pour être orientés dans le plan horizontal.

Les supports de roues arrière 502 sont fixés aux tiges de liaisons 401 par l'intermédiaire de liaisons de type « pivot » permettant d'amener les roues d'une position verticale à une position horizontale, ces liaisons sont appelées « liaisons de pliage ». Les supports de roues disposent donc d'un degré de rotation vertical. Les liaisons de pliage avant sont situées à égale distance sur les tiges de liaison que les liaisons de pliage arrière entre elles.

Dans un mode de réalisation, les tiges de liaisons sont pivotantes sur elles-mêmes et solidaire des supports de roues. La rotation d'une tige de liaison 401 à 90° entraine mécaniquement les roues avant et arrière d'un côté de la structure portante dans le plan horizontal. C'est donc également un moyen de synchroniser les roues avant et arrière lorsque les supports de roues sont solidaires des tiges de liaison.

Dans une alternative de réalisation, les supports de roues peuvent être directement reliés au dispositif de pliage central. Chaque liaison de pliage est dans ce cas située à l'extrémité de chaque bras d'une croix pliable.

Les tiges de supports de roues peuvent être de forme cylindrique. D'autres types de sections de tiges peuvent être employées telles qu'une section carrée ou rectangulaire ou encore une section de type « arbre cannelé » peut être utilisée. Une amélioration consiste à ajouter des flasques au niveau des liaisons pivot, des flasques cylindriques ayant en leur centre un évidement correspondant à la section retenue.

La rotation d'un quart de tour des deux tiges de support peut être obtenue de différentes façons en fonction des solutions techniques employées de l'invention.

Dans une première variante de réalisation, un utilisateur effectue lui-même manuellement la rotation de chaque tige de support 501, respectivement 502 pour l'ensemble des tiges de supports des roues arrière et avant.

Dans cette variante, un système d'indexation 601, 604, 602 peut être mis en oeuvre pour sa réalisation. Le système d'indexation comprend, dans ce mode, deux dispositifs d'indexation 601 placés de chaque côté de préférence à l'arrière de la poussette. Ils peuvent être également employés à l'avant.

Ces dispositifs d'indexation 601 peuvent être soit externes soit internes. Lorsqu'ils sont internes, le dispositif d'indexation est intégré dans l'axe de chaque tige 501, 502 du support avec un bouton poussoir en bout d'axe.

Les figures 4A et 4B représentent un système d'indexation externe à la tige. Un exemple de réalisation représentant les roues arrière, comprend deux secteurs 601 disposés aux extrémités de chacun des supports de roues. Les secteurs peuvent être compatible des roues avant également.

Les secteurs 601 permettent de d'activer ou de bloquer la liaison pivot 604 reliant les tiges de liaisons 401 avec les tiges de support 502, comme représenté à la figure 4B ou 4A.

En outre, chaque secteur 601 permet de bloquer les roues dans une position pliée ou non pliée. Chacun des secteurs comprend deux trous 602, 603 positionnés à 90° correspondants à la position pliée et à la position dépliée de chaque roue. La figure 4A représente une position pliée des roues arrière de la poussette et la figure 4B une position dépliée des roues arrière de la poussette.

Dans un autre mode de réalisation, le dispositif d'indexation est disposé à l'intérieur des supports de roues. Lorsque les supports de roues sont des tubes creux, le dispositif d'indexation est situé à l'intérieur du tube. Les deux trous sont alors positionnés directement dans le tube dans lequel viennent s'insérer des ergots que l'utilisateur peut effacer par un bouton poussoir par exemple en bout d'axe.

Ce mode de réalisation a l'avantage d'une simplicité de réalisation et comporte une ergonomie améliorée. En outre, ce mode de réalisation permet de garder la possibilité de plier la poussette en gardant les roues verticales au besoin. Le pliage des roues devient alors optionnel. Ce mode est intéressant lorsqu'il n'y a pas besoin d'obtenir un encombrement minimal en hauteur de la poussette.

Un mode de réalisation, qui peut se combiner aux autres modes, peut comporter des commandes sur les poignées101 qui permettent d'engager le pliage des roues et éventuellement le dispositif de synchronisation permettant d'engager les autres pliages de la poussette. Les commandes de pliages déportées aux poignées 101 peuvent être réalisées de différentes manières. Un premier exemple est un cardan, par exemple tels que ceux utilisés pour des volets roulants, disposé sur une poignée permettant d'engager une rotation des roues arrières par une simple action sur une poignée. Un autre exemple peut être un moyen de type dérailleur ou encore un système d'engrenages simples.

Dans une seconde variante de réalisation, la structure portante comprend des moyens permettant le pliage des roues et des moyens pour synchroniser les différents pliages notamment celui qui permet de plier la structure portante à partir du dispositif de pliage central. Dans l'exemple d'une poussette, le pliage de toutes les roues peut être synchronisé de manière à ce que toutes les roues tournent en même temps et selon le même angle lorsque le pliage des roues est engagé. Par ailleurs, dans d'autres modes de réalisation qui sont décrits dans la suite de la description, le pliage de l'armature de guidage et/ou le pliage permettant de diminuer la distance entre les roues est/sont synchronisé(s) avec le pliage horizontale/vertical des roues.

Nous considérons donc les différents pliages suivants :
- le pliage des roues permettant de ramener les roues dans le plan horizontal ;
- le pliage de l'armature qui permet de rabattre l'armature dans le plan horizontal et ;
- le pliage central permettant de ramener les roues d'un côté vers les roues de l'autre côté de manière à réduire la largeur de la poussette.

Les solutions décrites ci-après sont appelées des solutions de « pliages automatiques » dans lesquels différents moyens de synchronisation peuvent être mise en oeuvre de manière à synchroniser les pliages évoqués ci-dessus.

Dans une première variante de réalisation de pliage automatique, la structure portante de l'invention comprend des rampes héliocoïdales 701.

La figure 5 représente un premier type de rampes hélicoïdales. Dans cet exemple le dispositif de pliage central est une croix pliable 300. La liaison hélicoïdale permet de réaliser une liaison en translation et en rotation entre les supports de roues et les tiges de liaison. Cette liaison peut être également réalisée, lorsqu'il n'y a pas de tige de liaison, avec le dispositif de pliage central 300. Les rampes hélicoïdales 701 permettent donc une rotation des roues avant tout en diminuant l'encombrement des roues à l'avant de la poussette puisque la longueur totale de la poussette n'augmente pas. La figure 5 représente une telle poussette, en vue de profil, dans des positons pliée et dépliée.

Cette solution permet de reporter une partie de la variation de distance Da-Db, représentée à la figure 3, de la largeur de la poussette entre la position pliée et la position non pliée sur la variation de distance d1 de la position des roues de devant dans la longueur de la poussette. Cette longueur d1 peut alors être de l'ordre de 8 à 10 centimètres.

La présence des tubes permet de rendre solidaires les supports de roues avant et arrière. De ce fait, un avantage de ce mode de réalisation résulte du fait que les roues arrière étant bloquées en déplacement longitudinal, toute la valeur du déplacement en rotation est transmise au coulissement des liaisons avant et à leur rotation dans le plan horizontal.

Cette solution permet un déplacement de la liaison réalisée par une rampe hélicoïdale 701 entrainant un déplacement d'ergots dans la rampe. La rampe peut être double, c'est-à-dire qu'elle est située de chaque côté de la poussette sur chacune des tiges de liaison 401. L'utilisation d'une double rampe permet d'équilibrer les efforts.

Une première réalisation consiste à évider, suivant le profil recherché, le tube 401 qui sert de tiges de liaisons.

Une deuxième réalisation consiste en ce que les ergots soient, au contraire, solidaires de l'axe des tubes 401 et qu'ils coulissent dans la rampe 701 qui évolue, vers le support de roue avant, d'une distance suffisante pour intégrer la rampe hélicoïdale. Cette solution est représentée à la figure 6. Elle permet notamment d'éviter de fragiliser la partie avant du tube.

Dans ces deux dernières réalisations, le dispositif de synchronisation permet de synchroniser :
- le pliage des roues permettant de ramener les roues dans le plan horizontal et ;
- le pliage central permettant de ramener les roues d'un côté vers les roues de l'autre côté de manière à réduire la largeur de la poussette.

En outre, ce dispositif de synchronisation, peut être combiné avec un dispositif de liaisons additionnelles notamment pour augmenter la rigidité de la poussette.

Le dispositif de synchronisation réalisé par une rampe hélicoïdale d'une poussette peut être dimensionné de manière à concevoir le profil de la rampe de manière à ce qu'elle corresponde à la cinématique globale de pliage/dépliage de la poussette notamment réalisé par le dispositif de pliage central.

Dans un mode de réalisation amélioré, l'armature de guidage comprend des bras arrières susceptibles de se plier en largeur, par exemple en rotation par l'intermédiaire d'une croix pliable telle que cette qui peut être utilisée pour le dispositif de pliage central, et de se rabattre vers les roues. Une solution qui peut être alors employée permet de transformer le mouvement de rotation des bras arrière de la poussette en rotation des axes des tiges de liaison, notamment par une liaison pivot. Les roues étant solidaires des axes, la rotation des tiges de liaison d'un quart de tour entraine la rotation des roues dans le plan horizontal.

Les dispositifs de synchronisation permettent donc dans ce cas de synchroniser :
- le pliage des roues permettant de ramener les roues dans le plan horizontal ;
- le pliage de l'armature qui permet de rabattre l'armature dans le plan horizontal et ;
- le pliage central permettant de ramener les roues d'un côté vers les roues de l'autre côté de manière à réduire la largeur de la poussette.

L'invention comprend un avantage quant à la commodité de pliage d'une poussette dont le pliage de l'armature de guidage entraine tous les autres pliages.

Dans une seconde variante de réalisation de pliage automatique, la structure portante de l'invention comprend des engrenages. Les engrenages permettent, notamment, de facilement transformer le mouvement de rotation des bras arrière de la poussette en rotation des tiges de liaison dont les roues sont solidaires par des renvois d'angle à engrenages positionnés aux articulation des bras arrière.

La figure 7 représente une poussette comprenant de tels engrenages disposés dans la zone 800 à la jonction des bras arrière 102 de l'armature de guidage et du dispositif central de pliage 300.

Dans un premier mode de réalisation de cette seconde variante, les renvois d'angle peuvent être réalisés par des engrenages coniques. Dans ce cas, il peut s'agir, à titre d'exemple, d'engrenages comportant une vingtaine de dents et ayant un diamètre extérieur d'environ 40 mm. Cela conduit donc à ce que les deux axes de rotations se croisent à une distance de l'ordre des dimensions de l'engrenage, soit de 40 mm.

Une solution alternative de ce premier mode de réalisation comprend deux renvois d'angle à engrenages hélicoïdaux à axes croisés.

La figure 8 représente une configuration dans laquelle des engrenages situés dans la zone 800 permettent de positionner les supports de roues 502 dans le prolongement des tiges de liaisons 401. Cette représentation ne tient pas compte du décalage de position nécessaire entre les bras arrière et les tiges de liaison du fait de la présence des engrenages.

Les engrenages permettent de transmettre un mouvement de rotation des bras arrière 102 en un mouvement de rotation des supports de roues 502 dans un plan horizontal.

La figure 9 représente un mode de réalisation dans lequel les extrémités supérieurs 90 des supports de roues arrière 502 sont positionnés de manière à être décalés vis-à-vis des tiges de liaison 401. Sur la figure 9, ils sont représentés en vis-à-vis des tiges de l'armature 100 de guidage de la poussette et situés dans un plan vertical dans le sens de la longueur de la poussette. Ce mode de réalisation permet de tirer un avantage d'un encombrement minimal pour positionner les engrenages. En effet, ce dernier mode décale nécessairement les axes des bras arrière qui transmettent le mouvement de rotation aux supports de roues. Ainsi de manière optimale le mouvement des bras arrière 102 entraine la rotation des axes 502 des supports des roues dans le plan horizontal. La distance entre les deux axes, des bras et des supports, en rotation dans l'engrenage est de l'ordre de 40mm pour une poussette. Cette distance correspond au dimensionnement des engrenages choisis.

Avantageusement, les engrenages sont choisis de manière à fonctionner sur un quart de tour sur une partie du secteur utile de l'engrenage. Le ratio de conversion des mouvements de l'engrenage peut être choisi égal à 1:1 dans la mesure où en regard du quart de tour attendu, les bras arrière effectuent en plus un quart de tour vers l'avant pour être rabattus dans le plan horizontal. Ainsi ce choix est cohérent d'une rotation des bras arrière 102 et d'un pliage de l'armature dans le plan horizontal, d'une rotation d'environ 90°.

Dans une variante de réalisation, l'implantation des engrenages peut être réalisée à l'avant de la structure portante pliable et/ou de la poussette.

Il est également possible de réaliser de façon équivalente une solution à engrenage en exploitant une solution sur la base d'une charnière 1070 dont l'axe 1071 est placé dans le plan bissecteur 1072 de l'angle variable concerné.

La figure 29 illustre ce mode de réalisation dans lequel sont référencés les éléments décrits.

La charnière 1070 relie d'une part l'axe de rotation qui actionne les tiges des supports de roue 502 et d'autre part le bras concerné, en l'occurrence le bras arrière

La charnière est positionnée dans le plan bissecteur de l'angle où les deux axes suivant se croisent :
- d'une part l'axe 102 correspondant aux bras arrières de la poussette sur la figure 29 et ;
- d'autre part, l'axe 401 correspondant aux tiges de liaisons.

L'axe de la charnière 1071 est positionnée sur une bissectrice 1072 sécante avec les deux axes 401 et 102. A titre d'exemple pour un angle de 90° entre les deux axes, la bissectrice est à 45° par rapport à chaque axe.

Lorsque l'angle entre les deux axes est de 96°, la bissectrice est à 48° de chacun des axes 401, 102, comme représenté sur la figure 29.

Quand la poussette est dépliée la charnière est ouverte à 180° dans un plan vertical.

Quand la poussette est pliée, la charnière 1070 est fermée et positionnée horizontalement.

En position ouverte, en actionnant le bras arrières 102 vers l'avant la charnière 1070 va progressivement se plier vers l'intérieur de la poussette passant de la position verticale à la position horizontale ce qui mécaniquement fait produire une rotation de 90° de l'axe solidaire des supports des roues 502.

Cette rotation va également s'appliquer au bras arrière 102 ce qui est possible par exemple en liant cette rotation avec la rotation des poignées de la poussette. Dans cette réalisation, la charnière 1070 est fixée au bras supérieur arrière 102 par sur un manchon 1073 qui assure la libre rotation du bras supérieur arrière 102 réalisé dans ce cas sous la forme d'un tube.

Le manchon 1073 est positionné sur le tube en étant contraint par deux bagues à chaque extrémité. Ainsi contrairement à l'axe solidaire des supports de roues 502, le bras arrière 102 n'est pas soumis à la rotation ce qui résout également notamment l'implantation du dispositif de maintien en parallèle des deux bras arrière 102.

Il peut être développé de façon spécifique un coude articulé réalisant cette fonction et intégrant également :
- la butée d'ouverture de la charnière à 180°;
- le maintien du positionnement longitudinal du manchon sur le tube par un ergot de déplaçant dans une ouverture quart de tour ;
- une solidarisation supplémentaire en position finale ouverte entre la partie inférieure du bras arrière ou son prolongement avec l'axe de rotation du support de roue et/ou le support de roue via un ergot venant se loger dans un orifice ou deux pièces en interface.

Comme pour la solution à engrenage, cette solution peut également s'appliquer à l'avant de la structure portante pliable et/ou de la poussette sur un angle proche de 45°.

D'autres variantes de réalisations se combinent avec les modes précédents. Notamment, l'invention se rapporte également à des dispositifs complémentaires visant à augmenter la rigidité notamment de la structure portante ou de la poussette dans sa position dépliée. Ces derniers dispositifs permettent de ne pas faire reposer le poids de la structure et les efforts liés à la cinématique de pliage et dépliage sur les des dents des engrenages.

Dans une troisième variante de réalisation de pliage automatique, la structure portante de l'invention comprend des dispositifs de liaisons mécaniques permettant d'assurer la synchronisation des pliages des roues entre elles et leur synchronisation avec les autres pliages de la structure portante.

Un premier mode de réalisation comprend un dispositif de synchronisation 900 situé à l'arrière de la structure portante.

On nomme la voie, la distance entre les traces des roues quand la structure portante est dépliée et qu'elle roule. Il s'agit de l'écartement maximal de la poussette quand elle est dépliée. Le dispositif de synchronisation 900 assure un maintien de l'écartement entre les deux supports de roues arrière, cet écartement correspondant à la voie de la structure portante. En outre, le dispositif de synchronisation assure également le blocage en butée à 90° des supports de manière à ce que les roues ne rentrent pas vers l'intérieur de la structure portante. Cette configuration permet notamment de protéger les roues lorsque par exemple une poussette est transportée pliée ou posée sur un sol.

La figure 10A représente un premier dispositif de rigidification 900 qui est lié aux deux supports de roues arrière 502 de part et d'autre de la structure portante.

Pour assurer le maintien de l'écartement entre les deux supports de roues 502, un dispositif de rigidification 900 peut être combiné aux dispositifs de synchronisation de la structure portante de l'invention. Le dispositif de rigidification 900 peut comprendre, par exemple, une barre 901 disposée horizontalement entre les supports de roues arrière dont la longueur est sensiblement égale à la dimension de la voie. La barre 901 est pivotante à ses deux extrémités qui sont reliées aux supports de roues 502 à un point particulier, appelé le point pivot inférieur. La barre 901 partage donc deux liaisons de type « pivot » avec chacun des supports 502.

La barre 901 assure également une conservation d'une distance fixe entre les tiges de liaisons lors qu'un système de verrouillage peut être associé au dispositif de rigidification. Cependant, lorsque la rotation des roues 202 est engagée on constate que l'espace entre les tiges de liaison est réduit sur la figure 10A alors que la tige horizontale est restée horizontale mais est située dans le plan des supports de liaison lorsqu'ils sont pliés.

En outre, la barre est positionnée à une hauteur optimale de façon à ce qu'en version pliée, elle soit compatible de l'angle de fermeture de la croix centrale 102 de l'armature de guidage.

Les figures 10A et 10B représentent les configurations pliées et dépliées de ce mode de réalisation. On comprend sur la figure 10B que la distance d2 entre la barre horizontale 901 et l'axe de rotation du support de roues 502 doit être sensiblement égale à la variation de distance d2' des tiges de supports de roues entre elles entre les positions pliée et dépliée.

Les deux extrémités 90 des supports de roues 502 forment avec les points 82 et 83 un quadrilatère déformable lorsque la structure est pliée ou dépliée. Les points 82 et 83 sont définis de telle sorte que les supports de roues peuvent tourner autour de leur liaison pivot 90. Les points 82, 83 suivent, lors du pliage, une trajectoire formant un arc d'une hélice verticale dont l'axe passe par le centre de la croix centrale qui est dans ce cas le dispositif central de pliage. Les points 82 et 83 se rapprochent des points 80, 81. Le mouvement des supports de roues s'effectue tout en maintenant la distance entre les points 82 et 83 constante et définie par la longueur de la tige 901 invariante.

Les caractéristiques du quadrilatère déformable défini par l'invention sont que :
- la base inférieure est de longueur fixe et sensiblement égale à la largeur de la poussette au déport des roues près ;
- la base supérieure est horizontale et variable avec l'action du pliage de la structure portante ;
- les côtés du quadrilatère ont une longueur fixe et sont égaux à la demi-variation en largeur obtenue par le dispositif de pliage/dépliage entre la position pliée et dépliée.

Il est nécessaire de limiter la rotation des supports de roues à un quart de tour pour éviter tout dommage par une rotation libre. Pour pallier à cet inconvénient des butées d'angle à 90° peuvent être utilisées. Alternativement un dispositif d'indexation peut être utilisé réalisant la même fonction. Le quadrilatère devient un rectangle lorsque la structure est en position dépliée.

Dans le cas des butées d'angle, une solution consiste à intégrer ces dernières dans les liaisons pivot entre les supports de roues et les tiges de liaison ou avec le dispositif de pliage central.

La figure 11 représente une telle liaison intégrant une butée à 90°. Le mouvement en rotation des supports de roues 502 est alors bloqué en rotation. La liaison peut également intégrer des butées longitudinales, tels que des bords comme représenté à la figure 11. Les bords permettent de bloquer le mouvement des roues selon l'axe longitudinal de la poussette.

L'exemple de la butée de la figure 11 concerne une butée pour les angles droits supérieur gauche et supérieur droit pour empêcher l'angle de devenir inférieur à 90°. La combinaison de restrictions permet de maintenir l'ensemble des tiges à angle droit en position dépliée.

Un avantage de ces solutions est la sécurité d'emploi des dispositifs de synchronisation associés à des structures portantes pliables.

Dans un mode amélioré, un dispositif de compas peut être adjoint à la barre horizontale 901 de manière à réduire le jeu du dispositif de synchronisation 900.

La figure 12 représente un dispositif de compas de l'invention qui comprend une barre 901 horizontale et des barres 902, 903, 904 et 905. L'agencement des barres est optimisé par la longueur de chaque barre, leur position et leurs liaisons les unes par rapport aux autres. La figure 12 représente un exemple de mise en oeuvre d'un dispositif de compas.

Soit « a » la longueur des tiges 903 et 905 et « b » la longueur des tiges 902 et 904. Si « h » est la distance à laquelle est positionnée la barre 901 de la liaison pivot de chaque support de roue et « v » est la largeur de la voie, on a les relations suivantes :
- (a+b)²= (1/2v)²+ h²
- a-b=h

Un choix adéquate de longueur de tiges du dispositif de compas et de leur agencement permet une configuration qui maintien la structure notamment de l'armature de guidage dépliée. Lors le mécanisme est déverrouillé ou débloqué, le dispositif de compas peut avantageusement permettre un pliage simple et peu encombrant.

Un autre mode de réalisation permet une amélioration de la synchronisation des pliages des roues entre elles et/ou des pliages des roues avec les autres pliages.

Dans ce mode amélioré, la barre horizontale est remplacée par un système de barres croisées 910, 911 telles que représentées à la figure 13A et 13B.

Lorsque le système de barres 910, 911 comprend deux barres, elles sont préférentiellement positionnées légèrement en diagonale et sensiblement en lieu et place à quelques centimètres près en hauteur l'une de l'autre, formant ainsi un anti-parallélogramme.

Ce positionnement permet d'assurer une synchronisation des rotations des roues gauche et droite. Les rotations s'effectuent autour d'axes fictifs de centres respectivement 82 et 83. Le déplacement des supports de roues s'effectuent selon soit un arc de cercle, soit une combinaison d'un arc de cercle et d'une translation. L'axe 85 est représenté à titre indicatif, cet axe relie les deux axes de rotations de chaque support de roues.

Les extrémités des supports de roues 90 se rapprochent en se déplaçant dans ce cas chacun sur un arc d'une hélice verticale dont l'axe passe par le centre de la croix pliable centrale. Les extrémités 90 des supports de roues se déplacent vers les positions 80, respectivement 81 lorsque la poussette est pliée.

La synchronisation des roues droites et gauches est obtenue grâce aux propriétés géométriques de la liaison quatre barres retenues formant un anti-parallélogramme déformable. La liaison impose des angles de rotation identiques à droite et à gauche du fait de sa symétrie.

Le dispositif de compas combiné aux butées de la figure 13, permet d'empêcher l'angle entre les tiges de support et les tiges de liaisons de devenir supérieur à 90°. La combinaison des deux compas représentés à la figure 14 maintien également l'ensemble à être rectangle.

Les deux dispositifs, de butée et de compas, sont complémentaires et peuvent être utilisés indépendamment l'un de l'autre.

Le dispositif de butée de la figure 13 permet de bloquer en coulissement l'axe dans les liaisons de pliage.

L'anti-parallélogramme remplit en plus la fonction de la barre transversale à laquelle il se substitue de façon presque équivalente :
- en position pliée, la distance entre les deux points d'articulations de la barre horizontale substituée est celle des barres diagonales de l'anti-parallélogramme;
- en position dépliée, la distance entre deux points d'articulations de la barre horizontale substituée est la largeur de la voie.

Dans la figure 13A, il a été retenu une proportion de l'anti-parallélogramme d'un rapport environ de 1 à 7 :
- cela permet d'avoir un écart d'1 % entre les deux valeurs; l'hypoténuse d'un triangle rectangle de base 1 et de hauteur 1/7 a pour longueur la racine carrée de 1 +1 /49 = 1 + 2% égal à 1 + 1 % fois la base.
- de conserver un écartement de quelques centimètres entre les liaisons de pliages.

La figure 13B représente le dispositif de synchronisation du pliage des roues entre elles lorsque les roues sont partiellement pliées. On remarque que l'axe 85 dessiné en pointillé montre qu'il existe deux points des supports de roues 82, 83 dont la distance reste invariante. Cette distance invariante est symbolisée par la barre horizontale 85 théorique.

Un des principes de l'invention repose sur le fait qu'il existe un point sur chaque support qui permet avec les deux points formant les extrémités de chaque support de définir un trapèze déformable isocèle ABC D. Le quadrilatère déformable du mode de réalisation de la figure 10B est un trapèze théorique dans ce mode de réalisation. Une particularité de ce trapèze est qu'il se déforme tout en restant isocèle pendant le pliage. Ce trapèze existe en théorie pour chacun des modes de réalisations de la présente invention à partir du moment où on construit théoriquement les deux points 82, 83 sur les supports de roues.

Le trapèze comprend deux extrémités qui se déplacent selon une ligne horizontale entre deux points 88 et 80 d'une part et 81 et 89 d'autre part.

La figure 14 représente un autre mode de réalisation qui constitue une alternative lorsque les roues sont de grandes tailles. La rotation des supports de roues est toujours calculée à partir de points théoriques de rotation 82, 83 qui sont obtenues selon les dimensions des supports de roues et de la largeur de la structure portante. Dans cet exemple, un système de liaisons mécaniques 87 permet de remplacer un système de compas. Les liaisons mécaniques 87a, 87b, 87c, 87d représentées sur un seul côté de la structure (côté gauche) sont nécessairement fixées en haut des supports de roues. Cette contrainte résulte de la hauteur des roues. Cependant, le mécanisme permet de disposer un nouvel anti-parallélogramme 86 dont l'axe de rotation est situé sur l'axe 85 entre les points 82 et 83 de rotation théorique des supports de roues.

Comme au figure 13A et 13B, un trapèze déformable est défini par les deux extrémités des supports de roues et les points théoriques situés au niveau des roues qui sont des centres de rotation instantané de chaque support de roue pendant le pliage ou le dépliage. Ainsi le pliage des roues est synchronisé à l'arrière.

Le trapèze déformable comporte une distance fixe entre les deux points 82 et 83 et un déplacement horizontal des deux sommets supérieurs 90.

De manière à assurer la synchronisation des roues droite et gauche, d'autres systèmes peuvent être utilisés dans l'invention. De manière alternative, la synchronisation « droite-gauche » peut être assurée par une double articulation.

La figure 15 représente un mode de réalisation d'une double articulation 920 comprenant des engrenages, un autre mode de réalisation comprenant une double articulation 930 à axe bissectrice et enfin une variante de ce mode comprenant un double coulissement 940 qui permet d'optimiser l'agencement du dispositif de synchronisation avec une exigence de hauteur minimale.

D'autres alternatives peuvent être utilisées, notamment un dispositif de synchronisation comprenant uniquement des liaisons axiales.

Dans un autre exemple de réalisation, les deux coulissements du dispositif 940 de la figure 15 peuvent être remplacés par un mécanisme guidant de façon rectiligne le point central. Ces mécanismes peuvent être de type de l'inverseur de Peaucellier ou la liaison en ligne droite de Kempe, ou encore du mécanisme de Watt ou de Roberts.

La figure 16 représente un mode de réalisation dans lequel un dispositif de synchronisation comprend une double articulation pour synchroniser les deux compas et donc la rotation des roues gauches et droites. Ce dispositif permet aux extrémités des supports de roues de se déplacer horizontalement d'une part entre les points 89 et 81 et d'autre part entre les points 80 et 88.

Dans l'exemple de ce dernier mode de réalisation, représenté à la figure 16, une distance de 40 mm entre les deux articulations est choisie et le choix du profil d'engrenage est un engrenage à 10 dents module 4. Ces derniers sont adaptés à l'entraxe de 40 mm et garantissent l'absence de saut de dents.

Dans ce dernier exemple, une seule partie de l'engrenage est nécessaire dans cette application pour générer un mouvement de quart de tour. Les dents peuvent être directement taillées dans la barre de liaison qui représentée entre les deux engrenages de la figure 16.

La figure 17 représente un dispositif de synchronisation 960 sans engrenages avec un mécanisme de coulissement vertical.

La figure 18 représente une autre variante sans engrenage ni coulissement sur la base d'une liaison en ligne droite de Kempe.

Pour la réalisation de ces derniers modes de réalisation, il est nécessaire de construire autant de plans qui se superposent que de barres de liaisons. Des échancrures peuvent être intégrées dans les barres de liaisons pour le passage des pivots et/ou ajouter des profils en U.

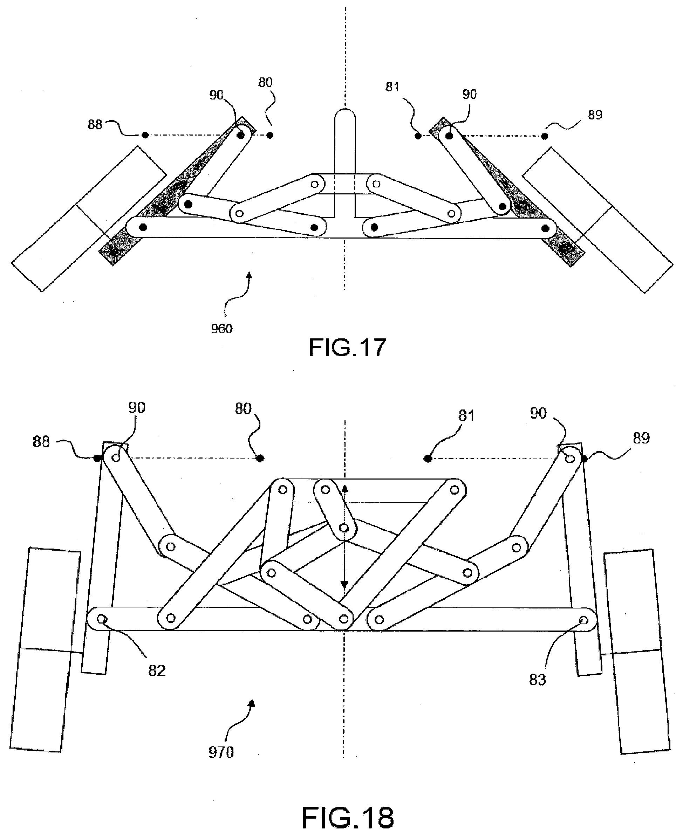

Pour maintenir vertical le plan du mécanisme, tel que celui de la figure 18, une barre horizontale peut être utilisée telle que celle du dispositif de la figure 10B.

Selon une alternative qui peut se combiner aux précédents modes, le dispositif de synchronisation peut être relié également au dispositif de pliage de l'armature telle qu'une croix centrale.

De manière à rigidifier la tenue de l'armature de guidage et le dispositif de synchronisation ensemble, l'invention permet de créer un point d'appui, quand il n'existe pas déjà mécaniquement, pour réaliser la liaison entre les supports de roues et l'armature de guidage.

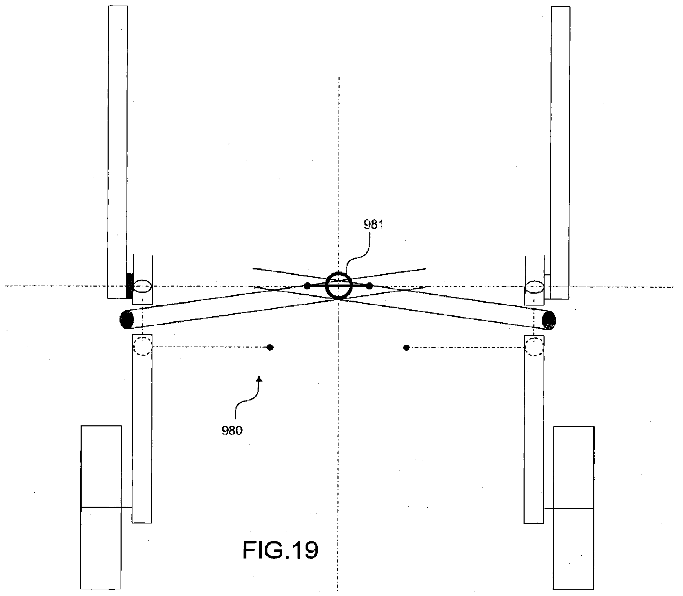

A figure 19 représente un exemple de réalisation dans lequel est représenté un point d'appui 981. Une solution consiste à considérer le point central 981 du dispositif de pliage de l'armature de guidage. Quand le dispositif de pliage de l'armature de guidage est une croix, le point d'appui est par exemple le centre de la croix. Plus généralement, le point d'appui est le milieu de l'axe d'articulation du dispositif de pliage de l'armature de guidage, qui peut être des bras arrière.

Un exemple de réalisation d'un tel point d'appui est une charnière d'environ 50 mm de large reliant deux platines dont l'axe est placé exactement en coïncidence avec l'axe de rotation des bras arrière.

Ainsi, ce point d'appui appartient à la droite d'intersection de trois plans :
- le plan des bras arrière en position dépliée, les bras engageant le mouvement de rotation au moment du pliage
- le plan horizontal qui est parallèle à celui de la croix centrale lorsque que le dispositif de pliage central est une croix pliable ;
- le plan vertical parallèle à celui des supports des roues arrière en position dépliée.

Si mathématiquement, il y a coïncidence géométrique de toutes les constructions possibles du point d'appui dans les différents plans et de l'axe verticale et longitudinal auquel le point d'appui appartient, selon différents modes de réalisation, il est intéressant d'exploiter un décalage de plusieurs millimètres de la position théorique du point d'appui pour construire des points de fixations des dispositifs de synchronisation et/ou de rigidification.

D'un côté de la charnière, correspondant à la partie supérieure de la structure portante, une platine est disposée dans un premier plan correspondant au plan des bras arrière qui est en mouvement de rotation au moment du pliage.

De l'autre côté de la charnière, au niveau de la partie inférieure de la structure portante, une autre platine est disposée dans le volume des plans horizontaux et verticaux qui sont inchangés en orientation au moment du pliage. Un second plan retenu préférentiellement pour cette deuxième platine est un plan vertical.

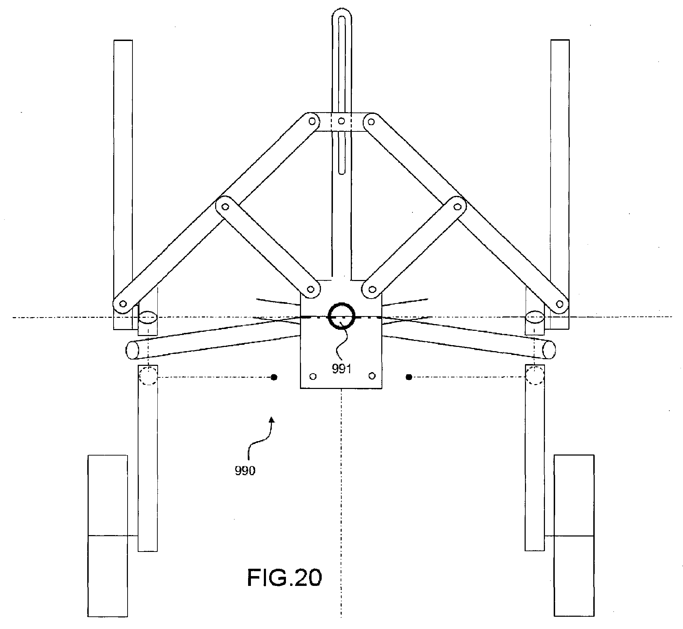

Lorsque le premier plan est celui des bras arrière d'une poussette, un mode de réalisation peut être celui représenté à la figure 20. Dans ce mode de réalisation, lorsque la poussette est pliée, la charnière centrale reste effectivement centrée sur l'axe 991 au milieu représenté sur la figure 20.

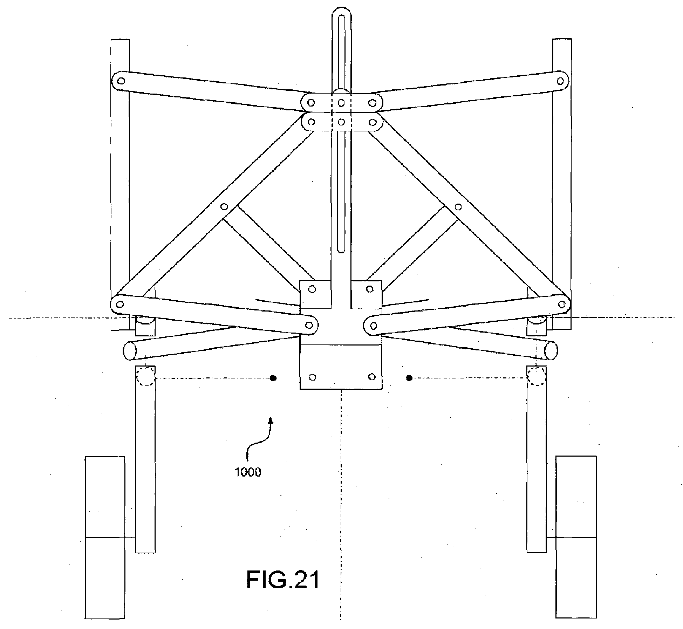

Lorsque ce dispositif est utilisé, il est nécessaire de veiller au positionnement commun des axes des tiges des dispositifs de synchronisation ou de rigidification sur les bras arrière pour conserver l'alignement de l'axe de la charnière avec l'axe de rotation des bras arrière comme cela est représenté dans une variante de réalisation de la figure 21.

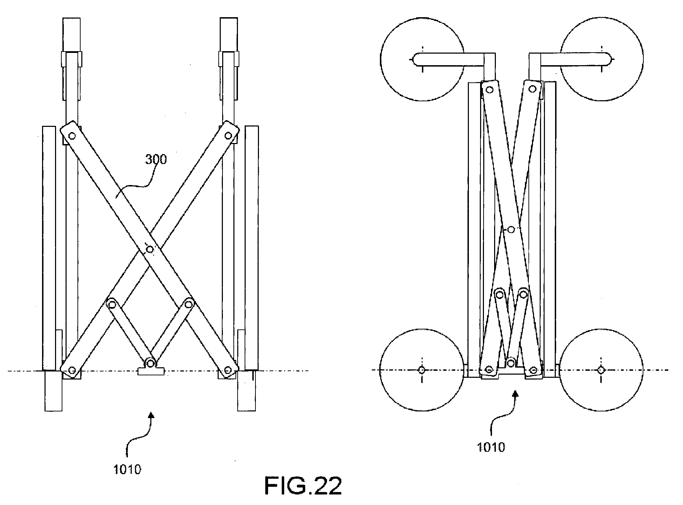

Lorsque l'armature de guidage ne comprend pas de bras arrière mais uniquement un dispositif de pliage central tel qu'une croix, l'invention permet de fixer le dispositif de synchronisation et/ou de rigidification 1010 directement sur les tiges de la croix comme cela est représenté à la figure 22.

Il peut suffire de relier par des liaisons ayant pour longueur environ le quart des diagonales de la croix et de les fixer :
- d'une part à mi-longueur des bras de la croix ;
- d'autre part sur un support perpendiculaire à la platine située au niveau de la partie inférieure de la charnière (non représentée en vue de dessus).

Ce mode de réalisation permet de positionner la charnière dans l'axe longitudinal de la poussette. Un dispositif de rigidification peut être ajouté au dispositif de synchronisation, notamment :
- en doublant les liaisons, par exemple en doublant le dispositif 1010 sur la face supérieure et la face inférieure des branches de la croix ;
- en adoptant un dispositif à double articulation comme précédemment décrit, y compris en utilisant l'axe central de la croix comme guidage.

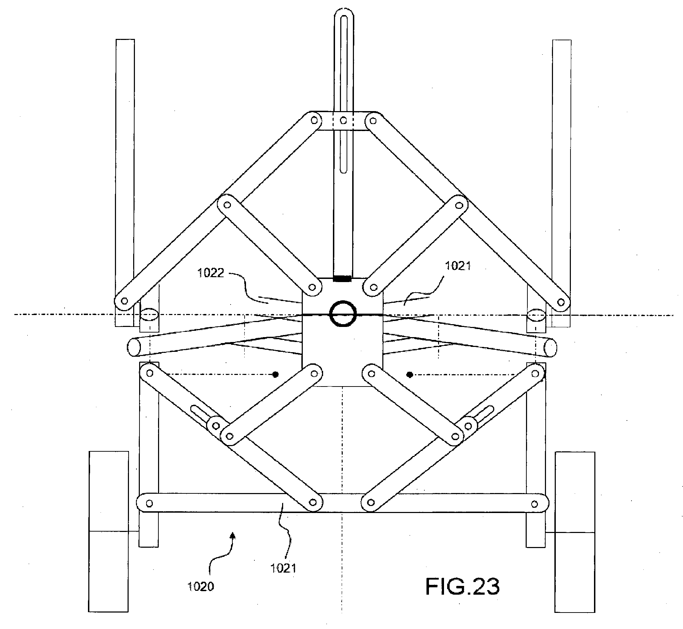

La figure 23 représente un mode de réalisation dans lequel le second plan, représenté par les tiges en perspective 1021 et 1022, est un plan horizontal parallèle à la croix horizontale du dispositif central de pliage.

Enfin, dans un autre mode de réalisation, un troisième plan vertical comprend une platine verticale d'environ 50 mm de large et 70 mm de hauteur on peut exploiter ce point d'appui pour rigidifier les structures de liaisons décrites précédemment.

Dans le cadre d'une réduction de l'encombrement des dispositifs de synchronisation et/ou de rigidification, la construction du point d'appui peut être adaptée. Notamment, il peut être intéressant de remonter la barre transversale, par exemple, du fait de la dimension des roues ou du fait de la garde au sol. L'invention concerne alors des dispositifs permettant un gain de compacité selon des variantes de réalisation de l'invention.

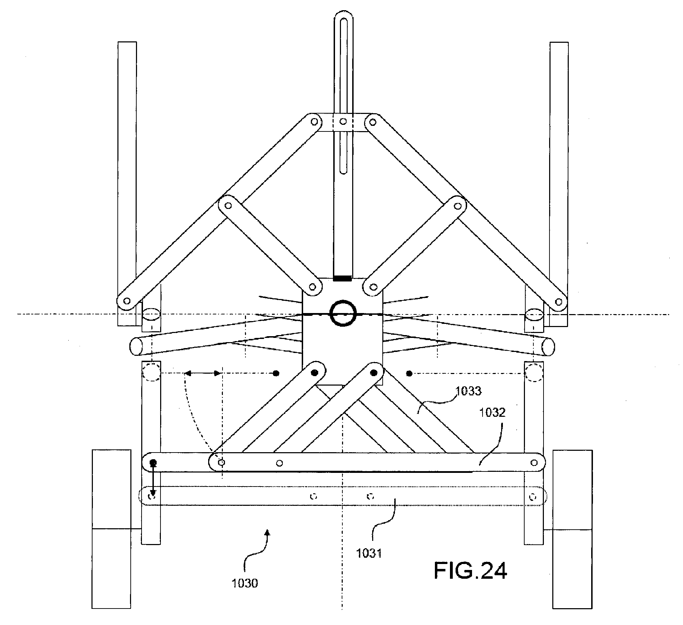

Le dispositif 1030 de la figure 24 permet de proposer une disposition particulière d'un dispositif de synchronisation permettant de gagner de la garde au sol. En fonction de la hauteur à gagner, on peut adapter le dispositif suivant de la figure 23 dans lequel la barre horizontale 1021 est à une hauteur donnée, au dispositif de la figure 24 dans lequel la barre horizontale 1032 est à une seconde hauteur plus haute que la position initiale 1031 de la barre 1021.

La figure 24 représente des doubles barres 1033 parallèles orientées selon une inclinaison qui peut varier selon le pliage du dispositif de synchronisation 1030. L'écart de position entre la position pliée et la position dépliée permet de gagner en hauteur une distance de 30%. Le calcul se base sur le fait :
- qu'en position pliée, les barres doubles 1033 sont à l'horizontale et ;
- qu'en position dépliée elles forment un angle donné typiquement de 45° à 90° avec l'horizontale.

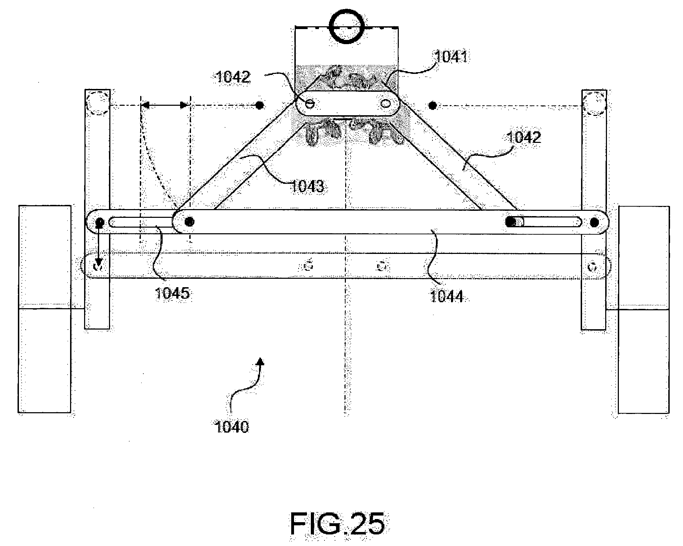

Pour assurer la synchronisation et simplifier le dispositif représenté à la figure 24, un dispositif de synchronisation 1040 amélioré, représenté à la figure 25, peut être utilisé. Ce dernier comprend une double articulation avec engrenages 1041 dans lesquels tournent deux tiges 1042 et 1043 maintenu par une pièce 1041 de fixation. Le dispositif de synchronisation 1040 permet de faire coulisser les deux barres transversales 1044 et 1045 l'une par rapport à l'autre.

Dans ce cadre, la barre transversale 1044 a une fonction de coulissement qui nécessite d'y adjoindre un dispositif permettant de limiter les frottements pour le confort de l'utilisateur. Il est possible d'utiliser des dispositifs de type « glissière de tiroir », par exemple à roulement à billes ou avec deux galets.

Par ailleurs, le dispositif de synchronisation 1040 comprenant une double-articulation peut être légèrement remonté en exploitant la surface de la platine située entre l'alignement des axes solidaires des roues et l'axe de la charnière de la platine.

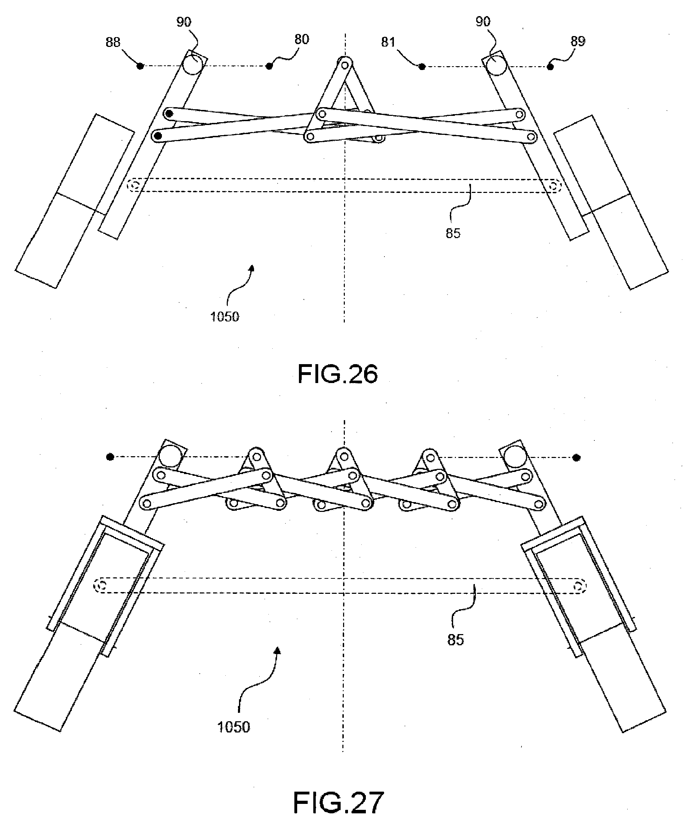

La figure 26 représente une alternative 1050 comprenant un point central construit à partir de la juxtaposition de liaisons dites à antiparallélogrammes déformables, qui sont à échelle ½ du dispositif de la figure 13.

L'invention concerne également les poussettes à trois roues dans lesquelles la roue avant, unique, est commandée par un axe central relié au point d'appui, appelé également point milieu. L'axe central est dans ce mode de réalisation alors relié à la rotation soit de la roue gauche, soit de la droite en fonction de la liaison choisie.

La figure 27 représente une ultime variante de réalisation 1050 dans laquelle il est également possible de créer en plus du point d'appui central positionné au milieu, des points d'appuis intermédiaires supplémentaires positionnés au 1/4 et au 3/4 de la largeur l'ensemble.

Dans ce cas, il est possible d'exploiter ces points supplémentaires en juxtaposant quatre liaisons à anti-parallélogrammes déformables, qui sont à échelle 1/4 de la solution décrite figure 13.

Les modes de réalisations des figures 26 et 27 sont des alternatives au mode de réalisation représenté à la figure 14. La figure 14 a un avantage de s'affranchir de la construction du point d'appui.

La figure 28 représente un dernier mode de réalisation comprenant un dispositif 1060 de synchronisation à partir de barres de liaison coulissantes dans une barre fixe horizontale qui est fixée par des liaisons pivots aux supports de roues au point de pivot inférieur.

Les dispositifs de synchronisation de l'invention permettent d'obtenir un accroissement des degrés de liberté concernant l'implantation des roues elles-mêmes notamment dans le cas de roues doubles et/ou pivotantes, notamment par l'élaboration de solutions complexes telles que décrites précédemment.

Un mode privilégié de l'invention concerne les dispositifs de synchronisation disposés à l'arrière de la poussette et comprenant des liaisons mécaniques. En outre, parmi ces solutions, les dispositifs permettant de faire pivoter non seulement les roues arrière mais aussi les roues avant grâce aux tiges de liaisons disposées de chaque côté qui transmettent la cinématique de rotation.

Dans d'autres modes de réalisation, les dispositifs de synchronisation et/ ou de rigidifications peuvent être implémentés à l'avant de la poussette. Cette dernière option présente d'autant plus d'intérêt si la combinaison du dispositif de synchronisation avant, du dispositif de pliage central et du dispositif de pliage de l'armature est capable d'assurer à elle seule de façon suffisamment rigide la rotation à la fois des roues avant et arrière et ainsi de permettre de dématérialiser la partie centrale des deux tiges de liaison disposés de chaque côté.

Cette dématérialisation de la partie centrale des deux tiges de liaison disposés de chaque côté peut également être rendue possible par l'adoption d'une transmission par cardans analogue aux systèmes de commande de volets roulants entre les roues avant et arrière.

L'optimisation notamment géométrique et potentiellement esthétique de l'ensemble dépend du choix de diamètres des roues qui peuvent être notablement plus grandes, et de la liberté de choix des axes de ces roues qui peuvent être décalés longitudinalement et/ou latéralement.

Enfin, comme illustré à la figure 28, l'invention concerne un dispositif de protection disposé sur le coté des liaisons de pliages de manière à éviter les frottements lorsque la poussette est en position repliée. Ces dispositifs de protection peuvent être avantageusement des patins ou des pieds de protection. Les supports de roues peuvent également avoir des dispositifs équivalents de protection.

En réponse à une attente de compacité supplémentaire, il est également possible de proposer en alternative ou en combinaison du pliage à plat à l'horizontal des roues, une variante permettant de poursuivre la rotation des roues jusqu'à la verticale.

Cette alternative présente l'avantage d'offrir un gain en largeur et permet de réduire l'encombre de la poussette notamment lorsque cette dernière est transportée.

Cette configuration peut correspondre :
- à une attente utilisateur, en fonction de l'espace dont il dispose pour ranger l'objet/la poussette pliés ;
- à une attente logistique, pour réduire le volume du produit transporté dans son conditionnement
- à une attente marketing, vis-à-vis d'une impression subjective de compacité à travers le produit plié lui-même et/ou son conditionnement.

Dans ce mode de réalisation la position de pliage correspondant à la position horizontale des roues est alors une position transitoire. Cette solution permet de poursuivre la rotation des roues jusqu'à une position finale à 180° par rapport à la position de départ en adaptant simplement les dispositifs concernés.

A titre d'exemples par rapport aux dispositifs déjà précédemment décrits :
- en version manuelle, cette alternative permet de proposer des positions d'ergots à 180° au lieu de 90° ;
- en version rampe hélicoïdale, de réaliser le profil correspondant
- en version engrenage de choisir un rapport d'engrenage de 1:2, et non plus 1:1 du renvoi d'angle à 90°.

Dans ce dernier cas, il est également possible de conserver le rapport 1:1, mais d'utiliser un duplicateur d'angle :
- soit en entrée, par exemple sur les bras de la poussette ;
- soit en sortie, sur les supports des roues.

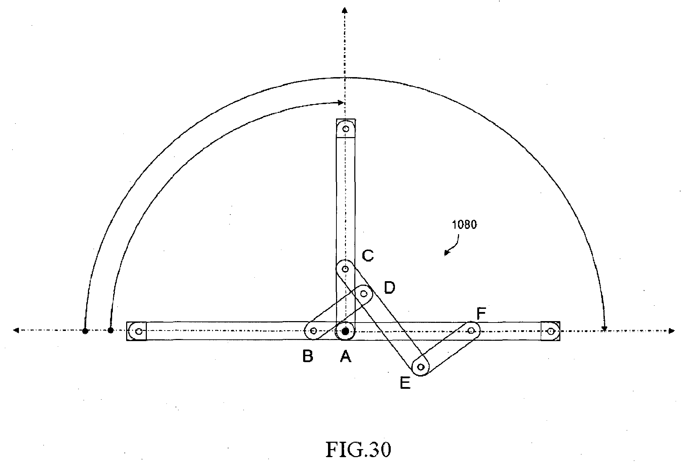

Un exemple de duplicateur 1080 d'angle est décrit à la figure 30 et consiste à utiliser une solution « bisecteur » issue du « trisecteur » d'Alfred Kempe à base de deux antiparallélogrammes dont l'un ACEF est le double de l'autre ABCD.

A noter que dans cette figure, le mode de réalisation impose les proportions suivantes prises pour une longueur AB=CD=1 :
o AB=AC=EF=2;
o CE=4.

Ainsi une rotation d'un quart de tour est transformée en une rotation d'un demi-tour.

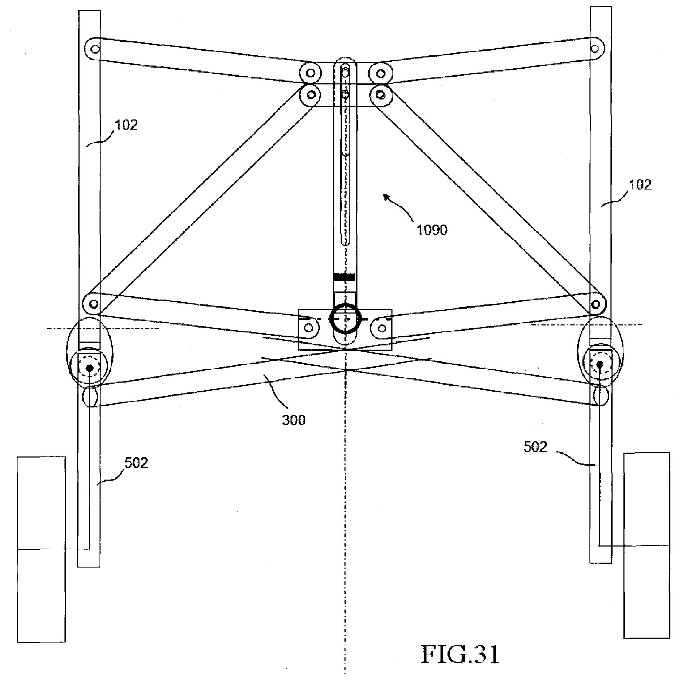

Dans le cas particulier de la superposition des bras arrière et des axes solidaires des roues, il s'agit d'une configuration qui conduit à une solution différente représentée par exemple par la solution de la figure 31.

Deux dispositifs de renvoi d'angle à 90° relient d'une part les bras arrière 102 et d'autre part les axes solidaires des supports de roue 502.

Les bras arrière 102 sont eux-mêmes reliés par un dispositif 1090 type compas assurant le parallélisme des deux bras 102 ainsi qu'une position de blocage.

Les deux axes solidaires des supports de roues 502 sont maintenus parallèles par une croix pliable 300, intentionnellement positionnée dessous les axes 102.

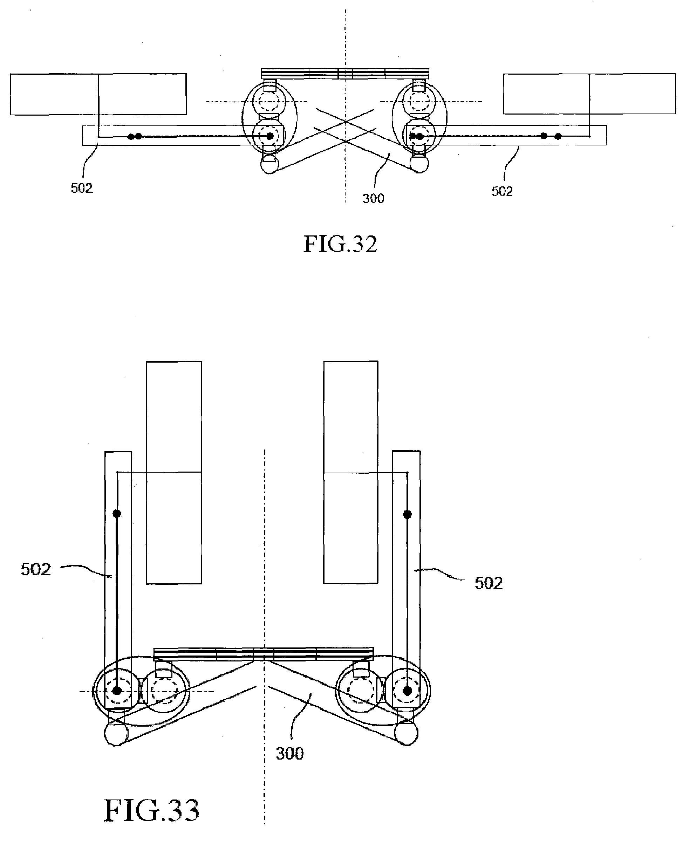

Lors du pliage de la structure portante ou de la poussette, une première position de pliage est représentée à la figure 32. La position pliée des roues 202 à l'horizontale est conforme aux caractéristiques de l'invention pour un pliage sensiblement à 90° des roues, c'est-à-dire que :
- les bras 102 sont abaissés vers l'avant, le compas est déverrouillé et replié en largeur ;
- le mécanisme de renvoi d'angle fait pivoter les roues sensiblement d'un quart de tour ;
- la croix 300 reliant les deux axes solidaires support des roues 502 également.

L'invention permet dans une variante de réalisation de poursuivre la rotation des roues d'un angle supplémentaire de 90°, les supports de roues et les roues ayant effectués au total une rotation d'un angle de 180°. La structure portante ou la poussette peut alors être pliée et rangée par un une position différente de rangement des roues : à l'envers à la verticale.

Dans le pliage à 180°, les roues sont placées à l'envers à 180° vis-à-vis de leurs positions initiales. Cette rotation permet de retrouver un mode transport pratique car compact dans lequel les roues ne sont plus situées dans un plan horizontal de référence (c'est-à-dire quand lorsque la poussette est posée pliée sur le sol).

Pour réaliser ce mode de réalisation, le dispositif permet d'effectuer une rotation d'un quart de tour des dispositifs de renvoi d'angle.

Cette dernière rotation suppose :
- d'une part que le dispositif reliant les bras arrière 102 est monté sur un tube ou des manchons disposant d'un degré de liberté de rotation d'un quart de tour et ;
- d'autre part que la croix pliable dispose également d'un degré de liberté en rotation pour permettre la rotation d'un quart de tour. Elle peut être également complètement libre.

Ces conditions permettent d'obtenir une position de pliage représentée à la figure 33 qui correspond à une poursuite du mouvement de rotation des roues jusqu'à un angle effectué complet de 180°.

Dans cette position, des moyens de rigidification permettent de maintenir les bras arrières pliés dans un plan perpendiculaire à au moins un plan comprenant les roues pliées à 180°.

Il est intéressant de contraindre le degré de rotation du dispositif qui relie les bras arrière 102, par exemple aux moyens :
- d'au moins un ergot disposé dans une rainure qui limite la rotation à un quart de tour. Cette solution permet d'ajouter une contrainte de raidissement en position ouverte ;
- d'un système d'indexation par trous et de deux positions positionnées à 90° permettant de rendre « commandable » manuellement ce dernier dispositif ;
- d'un système de cliquet venant après montage inhiber ce mode particulier qui peut être utiliser dans un mode de conditionnement pour la logistique et le transport.
- A noter que la position de pliage des roues à 180° permet de retrouver également une position transport, c'est-à-dire la capacité de transporter l'objet plié sur les roues arrière en le tenant par les poignées situées en partie supérieure des bras arrière après l'avoir retourné de 180°.

## Revendications

1. Structure portante comprenant :
• un ensemble de roues (201, 202) définissant un premier ensemble de roues avant et un second ensemble de roues arrière, l'ensemble de roues arrière comprenant au moins deux roues espacées d'une première largeur (Da) définissant une première position ;
• des supports de roues (501, 502) reliant les axes de rotation des roues avec la structure portante ;
• un premier dispositif de pliage (300) permettant un premier pliage entrainant la réduction de l'espacement entre les deux roues arrière à une seconde largeur inférieur (Db) à la première largeur, définissant une seconde position,
**caractérisée en ce que** des moyens de liaisons (401, 601, 701), reliant les supports de roues des premier et second ensembles au premier dispositif de pliage (300), permettent un second pliage des roues (201, 202) de manière à autoriser une rotation sensiblement égale à 90° des roues (201, 202) dans le plan horizontal lorsque les roues (201, 202) sont dans la seconde position.

2. Structure portante selon la revendication 1, **caractérisée en ce que** les moyens de liaison permettent un entrainement du second pliage par l'action du premier pliage.

3. Structure portante selon l'une quelconque des revendications 1 à 2, **caractérisée en ce qu'**elle comprend une armature de guidage (100) permettant de guider la structure portante lorsque les roues (201, 202) sont dans la première position.

4. Structure portante selon la revendication 3, **caractérisée en ce que** l'armature de guidage (100) comprend des bras avant (103), des bras arrière (102) et des poignées (101) et un second dispositif de pliage permettant un troisième pliage entrainant les bras avant (103) et arrière (102) dans un plan sensiblement horizontal.

5. Structure portante selon la revendication 4, **caractérisée en ce que** des moyens de rigidification (900) permettent de maintenir les bras arrière (102) et les roues arrière (202) dans un même plan dans la position du second pliage.

6. Structure portante selon la revendication 5, **caractérisée en ce que** des moyens de rigidification (900) comprennent une barre horizontale coulissante et de moyens de blocage de la dite barre permettant de maintenir les roues arrière verrouillées lorsque les moyens de blocage sont activés dans la première position et permettant de passer de la première à la seconde position quand le premier pliage est actionné lorsque les moyens de blocage sont désactivés.

7. Structure portante selon la revendication 3, **caractérisée en ce que** l'armature de guidage comprend des bras avant, des bras arrière et des poignées et un second dispositif de pliage permettant un quatrième pliage entrainant les bras arrière (102) dans un plan intermédiaire sécant au plan horizontal lorsque les roues sont sensiblement dans le plan horizontal, cette dernière position correspondant à une quatrième position, le quatrième pliage pouvant être poursuivie dans son mouvement par un cinquième pliage entrainant les bras arrière (102) dans un plan sensiblement horizontal de référence lorsque les roues ont effectué une rotation de 180° de manière à être dans un plan perpendiculaire au plan horizontal de référence, cette dernière position correspondant à une cinquième position.

8. Structure portante selon la revendication 7, **caractérisée en ce que** des moyens de rigidification permettent de maintenir les bras arrière (102) et les roues arrière (202) solidaires dans la cinquième position.

9. Structure portante selon la revendication 8, **caractérisée en ce que** des moyens de rigidification comprennent une barre horizontale coulissante et de moyens de blocage de la dite barre permettant de maintenir les roues arrière verrouillées lorsque les moyens de blocage sont activés dans la première position et permettant de passer de la première à la quatrième cinquième position quand le quatrième et le cinquième pliages sont actionnés lorsque les moyens de blocage sont désactivés.

10. Structure portante selon l'une quelconque des revendications 1 à 9, **caractérisée en ce que** des moyens de propagation (701) permettent la synchronisation du pliage des roues avant (201) et du pliage des roues arrière (202) lorsque le second pliage est activé.

11. Structure portante selon la revendication 10, **caractérisée en ce que** des moyens de propagation permettent la synchronisation du premier, du second et du troisième pliage.

12. Structure portante selon l'une quelconque des revendications 1 à 9, **caractérisée en ce que** des moyens de propagation permettent la synchronisation du pliage des roues avant et du pliage des roues arrière lorsque le quatrième et le cinquième pliages sont activés.

13. Structure portante selon la revendication 12, **caractérisée en ce que** des moyens de propagation permettent la synchronisation d'une part du premier et du second pliage avec d'autres part le quatrième et le cinquième pliages.

14. Structure portante selon l'une quelconque des revendications 1 à 11, **caractérisée en ce que** des seconds moyens de verrouillage de la position du premier dispositif de pliage et des moyens de propagations assurant la synchronisation des pliages permettent de maintenir la structure dans une position pliée souhaitée.

15. Poussette comportant une structure portante selon l'une quelconque des revendications précédentes.

## Patentansprüche

1. Trägerstruktur, umfassend:
• eine Radgruppe (201, 202), die eine erste Vorderradgruppe und eine zweite Hinterradgruppe definiert, wobei die Hinterradgruppe wenigstens zwei um eine erste Breite (Da) beabstandete Räder umfasst, die eine erste Position definiert;
• Radträger (501, 502), die die Rotationsachsen der Räder mit der Trägerstruktur verbinden;
• eine erste Knickvorrichtung (300), die ein erstes Knicken zulässt, das die Reduzierung der Beabstandung zwischen den zwei Hinterrädern auf eine zweite Breite (Db), die kleiner ist als die erste Breite, nach sich zieht und eine zweite Position definiert.
**dadurch gekennzeichnet, dass** Verbindungsmittel (401, 601, 701), die die Radträger der ersten und zweiten Gruppen mit der ersten Knickvorrichtung (300) verbinden, ein zweites Knicken der Räder (201, 202) derart zulassen, dass eine Rotation erlaubt wird, die deutlich gleich 90° der Räder (201, 202) in der horizontalen Ebene ist, wenn die Räder (201, 202) sich in der zweiten Position befinden.

2. Trägerstruktur gemäß Anspruch 1, **dadurch gekennzeichnet, dass** die Verbindungsmittel ein Mitnehmen des zweiten Knickens durch die Wirkung des ersten Knickens zulassen.

3. Trägerstruktur gemäß Anspruch 1 bis 2, **dadurch gekennzeichnet, dass** sie eine Führungsarmatur (100) umfasst, die die Führung der Trägerstruktur zulässt, wenn die Räder (201, 202) in der ersten Position sind.

4. Trägerstruktur gemäß Anspruch 3, **dadurch gekennzeichnet, dass** die Führungsarmatur (100) vordere Arme (103), hintere Arme (102) und Griffe (101) und eine zweite Knickvorrichtung umfasst, die ein drittes Knicken zulässt, das die vorderen (103) und hinteren (102) Arme in einer deutlich horizontalen Ebene mitnimmt.

5. Trägerstruktur gemäß Anspruch 4, **dadurch gekennzeichnet, dass** die Versteifungsmittel (900) das Halten der hinteren Arme (102) und der Hinterräder (202) in einer und derselben Ebene in der Position des zweiten Knickens zulassen.

6. Trägerstruktur gemäß Anspruch 5, **dadurch gekennzeichnet, dass** Versteifungsmittel (900) eine horizontale gleitende Stange und Feststellmittel der genannten Stange umfassen, die das Halten der festgestellten Hinterräder zulassen, wenn die Feststellmittel in der ersten Position aktiviert sind und den Übergang von der ersten in die zweite Position zulassen, wenn das erste Knicken betätigt wird, wenn die Feststellmittel deaktiviert sind.

7. Trägerstruktur gemäß Anspruch 3, **dadurch gekennzeichnet, dass** die Führungsarmatur vordere Arme, hintere Arme und Griffe und eine zweite Knickvorrichtung umfasst, die ein viertes Knicken zulässt, das die hinteren Arme (102) in eine die horizontale Ebene schneidende Zwischenebene mitnimmt, wenn die Räder deutlich in der horizontalen Ebene sind, wobei diese letztere Position einer vierten Position entspricht, wobei das vierte Knicken in seiner Bewegung durch ein fünftes Knicken fortgeführt werden kann, was die hinteren Arme (102) in eine deutlich horizontale Referenzebene mitnimmt, wenn die Räder eine Rotation um 180° derart durchgeführt haben, dass sie sich in einer zur horizontalen Referenzebene in einer lotrechten Ebene befinden, wobei diese letztere Position einer fünften Position entspricht.

8. Trägerstruktur gemäß Anspruch 7, **dadurch gekennzeichnet, dass** Versteifungsmittel das Halten der hinteren Arme (102) und der Hinterräder (202) in der fünften Position fest verbunden zulassen.

9. Trägerstruktur gemäß Anspruch 8, **dadurch gekennzeichnet, dass** Versteifungsmittel eine horizontale gleitende Stange und Feststellmittel der genannten hinteren Stange umfassen, die das Halten der festgestellten Hinterräder zulassen, wenn die Feststellmittel in der ersten Position aktiviert sind und den Übergang von der ersten in die vierte, fünfte Position zulassen, wenn das vierte und das fünfte Knicken betätigt werden, wenn die Feststellmittel deaktiviert sind.

10. Trägerstruktur gemäß Anspruch 1 bis 9, **dadurch gekennzeichnet, dass** Verbreitungsmittel (701) die Synchronisation des Knickens der Vorderräder (201) und des Faltens der Hinterräder (202) zulassen, wenn das zweite Knicken aktiviert ist.

11. Trägerstruktur gemäß Anspruch 10, **dadurch gekennzeichnet, dass** Verbreitungsmittel die Synchronisation des ersten, des zweiten und des dritten Knickens zulassen.

12. Trägerstruktur gemäß Anspruch 1 bis 9, **dadurch gekennzeichnet, dass** Verbreitungsmittel die Synchronisation des Knickens der Vorderräder und des Knickens der Hinterräder zulassen, wenn das vierte und das fünfte Knicken aktiviert sind.

13. Trägerstruktur gemäß Anspruch 12, **dadurch gekennzeichnet, dass** Verbreitungsmittel die Synchronisation einerseits des ersten und des zweiten Knickens mit andererseits dem vierten und dem fünften Knicken zulassen.

14. Trägerstruktur gemäß Anspruch 1 bis 11, **dadurch gekennzeichnet, dass** zweite Feststellmittel der Position der ersten Knickvorrichtung und Verbreitungsmittel die Synchronisation des jeweiligen Knickens gewährleisten, die das Halten der Struktur in einer gewünschten geknickten Position zulässt.

15. Buggy, umfassend eine Trägerstruktur gemäß einem der voranstehenden Ansprüche.

## Claims

1. A bearing structure comprising:
• a wheel assembly (201, 202) defining a first front wheel assembly and a second rear wheel assembly, the rear wheel assembly comprising at least two wheels spaced by a first width (Da) defining a first position;
• wheel supports (501, 502) connecting the axes of rotation of the wheels with the bearing structure;
• a first folding device (300) enabling a first folding causing a reduction in spacing between the two rear wheels to a second width (Db) lower than the first width, defining a second position,
**characterized in that** connection means (401, 601, 701), connecting the wheel supports of the first and second assemblies to the first folding device (300), enable a second folding of the wheels (201, 202) so as to allow a rotation substantially equal to 90° of the wheels (201, 202) in the horizontal plane when the wheels (201, 202) are in the second position.

2. The bearing structure according to claim 1, **characterized in that** the connecting means enable a driving of the second folding by the action of the first folding.

3. The bearing structure according to any of claims 1 to 2, **characterized in that** it comprises a guide frame (100) enabling to guide the bearing structure when the wheels (201, 202) are in the first position.

4. The bearing structure according to claim 3, **characterized in that** the guide frame (100) comprises front arms (103), rear arms (102) and handles (101) and a second folding device enabling a third folding driving the front (103) and back (102) arms in a substantially horizontal plane.

5. The bearing structure according to claim 4, **characterized in that** rigidizing means (900) enable to hold the rear arms (102) and the rear wheels (102) in a same plane in the position of the second folding.

6. The bearing structure according to claim 5, **characterized in that** the rigidizing means (900) comprise a sliding horizontal bar and means for blocking said bar enabling to hold the rear wheels locked when the blocking means are activated in the first position and enabling to switch from the first to the second position with the first folding actuated when the blocking means are deactivated.

7. The bearing structure according to claim 3, **characterized in that** the guide frame comprises front arms, rear arms and handles and a second folding device enabling a fourth folding driving the rear arms (102) in an intermediate plane intersecting the horizontal plane when the wheels are substantially in the horizontal plane, this latter position corresponding to a fourth position, the fourth folding can be continued in its movement by a fifth folding driving the rear arms (102) in a substantially horizontal reference plane when the wheels have made a 180° rotation so as to be in a plane perpendicular to the horizontal reference plane, this latter position corresponding to a fifth position.

8. The bearing structure according to claim 7, **characterized in that** the rigidizing means enable to hold the rear arms (102) and the rear wheels (202) integral in the fifth position.

9. The bearing structure according to claim 8, **characterized in that** the rigidifying means comprise a sliding horizontal bar and means for blocking said bar enabling to hold the rear wheels locked when the blocking means are activated in the first position and enabling to switch from the first to the fourth and fifth position with the fourth and fifth foldings are actuated when the blocking means are deactuated.

10. The bearing structure according to any of claims 1 to 9, **characterized in that** the propagation means (701) enable the synchronization of the folding of the front wheels (201) and the folding of the rear wheels (202) when the second folding is activated.

11. The bearing structure according to claim 10, **characterized in that** propagation means enable the synchronization of the first, second and third foldings.

12. The bearing structure according to any of claims 1 to 9, **characterized in that** propagation means enable the synchronization of the folding of the front wheels and the folding of the rear wheels when the fourth and fifth foldings are activated.

13. The bearing structure according to claim 12, **characterized in that** the propagation means enable the synchronization on the one hand of the first and second foldings with on the other hand the fourth and fifth foldings.

14. The bearing structure according to any of claims 1 to 11, **characterized in that** second means for locking the position of the first folding device and propagation means ensuring synchronization of the foldings enable to hold the structure in a desired folded position.

15. A stroller comprising a bearing structure according to any of the preceding claims.
